# EUROPÄISCHE PATENTSCHRIFT

(11) **EP 3 786 496 B1**
(45) Veröffentlichungstag und Bekanntmachung des Hinweises auf die Patenterteilung: **11.10.2023**
(21) Anmeldenummer: 20000313.5
(22) Anmeldetag: 27.08.2020
(51) Int. Cl.: F16J 15/3208, F16J 15/3232, F16J 15/3248, F16J 15/3284, F16J 15/00, F16J 15/3252, F16J 15/3268, F16J 15/322

(54) **RADIALWELLENDICHTUNG**
RADIAL SHAFT SEAL
JOINT D'ARBRE RADIAL

(30) Priorität: 28.08.2019 DE 102019006053
(43) Veröffentlichungstag der Anmeldung: 03.03.2021
(73) Patentinhaber: VR Automotive Dichtungssysteme GmbH, 98673 Auengrund-Crock (DE)
(72) Erfinder: Schaub, Martin, 98646 Hildburghausen (DE); Bösert, Timmy, 96515 Sonneberg (DE)

(56) Entgegenhaltungen:
- EP-B1- 2 817 539
- US-A1- 2017 175 898
- US-B2- 9 695 935

## Beschreibung

Die Erfindung betrifft eine Radialwellendichtung zur Abdichtung einer, aus einem mit einem fluiden Medium beaufschlagten Raum herausgeführten rotierenden Welle, mit einem Dichtungsgehäuse, mindestens einem im Dichtungsgehäuse angeordneten, mittels einer Dichtlippe an der Welle dichtend anliegenden ringförmigen Dichtkörper, und mindestens einen den/die Dichtkörper im Dichtungsgehäuse positionierenden ringförmigen, metallischen Stützkörper, zur Abdichtung eines mit Flüssigkeit gefüllten Innenraumes gegenüber einem Außenraum, vorzugsweise der Atmosphäre.

Im Stand der Technik werden derartige Radialwellendichtungen im Maschinen-, Apparate- und im Kraftfahrzeugbau, zum Beispiel zur Abdichtung der Antriebswellen von Öl- oder Kühlmittelpumpen eingesetzt.

Aus der DE 3602500 A1 ist eine Radial-Öldichtung bekannt, welche zwischen einer Gehäusebohrung und einer Drehwelle eingesetzt wird, um dort ein in einem Gehäuse befindliches Fluid abzudichten. Die Dichtung besteht aus einem ersten Dichtungsring mit einer Gummi-Dichtlippe, die mittels einer am Dichtungsring radial oberhalb der Gummi-Dichtlippe angeordneten Schnurfeder gegen die Welle verspannt ist und abdichtend direkt an der Drehwelle anliegt, und einem zweiten Dichtungsring mit einer Kunstharz-Dichtlippe, der an der Luftseite des ersten Dichtungsrings und diesem benachbart angeordnet ist.

Die Kunstharz-Dichtlippe erstreckt sich entlang der Rückseite der Gummi-Dichtlippe und steht auch mit der Drehwelle in dichtender Berührung.

An der Luftseite des zweiten Dichtungsrings und diesem benachbart ist ein biegesteifer Verstärkungsring angeordnet.

Dieser Verstärkungsring ist entlang eines gebogenen Abschnitts der Kunstharz-Dichtlippe gekrümmt, um die Rückseite dieses gebogenen Abschnitts abzustützen. In der Gehäusebohrung ist zudem ein Außenring angeordnet, welcher die radial außenliegenden Abschnitte des ersten und des zweiten Dichtungsrings sowie des Verstärkungsrings fest fixiert.

Die EP 2817539 B1 offenbart eine weitere Radialwellendichtung mit den eingangs genannten Merkmalen. Bei dieser Bauform handelt es sich um eine praxisbewährte Lösung der Anmelderin mit zwei ringförmigen Dichtkörpern, einem aus einem Kunststoff und einem aus einem Elastomer, die in einem separaten aus Edelstahlblech gefertigten Dichtungsgehäuse voneinander, durch ein mittels eines Presssitzes im Dichtungsgehäuse fest angeordnetes, metallisches, ringförmiges Drehteil, einem Stützkörper, beabstandet angeordnet sind. Diese ringförmigen Dichtkörper sind mit Dichtlippen versehen, die an einer auf der Welle mit Presspassung aufgeschobenen Laufhülse dichtend anliegen.

Charakteristisch für diese Bauform ist, dass jeweils beide der Dichtlippen in ihrem an der Welle bzw. der Laufhülse anliegenden Bereich, stets einen zur Druckseite hin ausgeformten flächigen Dichtzylinder ausbilden, zumindest der Dichtkörper aus dem Elastomer weist eine am Außenumfang des Dichtzylinders angeordnete Außennut auf, in der eine Schnurfeder angeordnet ist, die den Dichtzylinder mit der zugehörigen Dichtlippe gegen die drehfest auf der Welle angeordnete Laufhülse presst, um einerseits bei rotierender Welle die Leckageverluste zu minimieren, und andererseits Stillstandsleckagen zu vermeiden.

Hieraus resultieren aber Leistungsverluste; welche auf die Reibungsverluste an den mittels der Schnurfeder/n vollflächig an die Laufhülse angepressten Dichtzylinder der jeweiligen Dichtlippen zurückzuführen sind.

Gemäß der EP 2817539 B1 besteht der druckseitig (wasserseitig) angeordnete ringförmige Dichtkörper aus einem Elastomer und der luftseitig angeordnete Dichtkörper aus einem Kunststoff, vorzugsweise aus Polytetrafluorethylen (PTFE).

Die zur Lagesicherung der beiden Dichtkörper im Dichtungsgehäuse Einsatz findenden Stützkörper sind ringförmige, metallische Drehteile, deren Fertigung zwangsläufig einen relativ hohen Fertigungsaufwand erfordert.

Zur Anordnung des luftseitigen Dichtkörpers, wird in der EP 2817539 B1 ein axialer Presssitz des Dichtkörpers aus Kunststoff, wie Polytetrafluorethylen (PTFE), zwischen dem Dichtungsgehäuse und dem Stützkörper mit axialer Sicherung des Stützkörpers durch mechanische Einkerbungen von außen vorgeschlagen.

Bei der Montage der in der EP 2817539 B1 vorbeschriebenen Lösung müssen, um eine zuverlässige radiale Lagesicherung des luftseitig angeordnete Kunststoff-Dichtkörpers aus Polytetrafluorethylen (PTFE) gegen sein "Mitdrehen" mit der Welle zu gewährleisten, bei der Montage des den Kunststoff-Dichtkörper im Dichtungsgehäuse verspannenden Stützkörpers über den Elastomerdichtkörper sehr hohe Montagekräfte aufgebracht werden, die in der Produktion zur Beschädigung des Elastomerdichtkörpers und damit zu Ausschuss führen. Um jedoch bei der Fertigung der Dichtungen nach der EP 2817539 B1 zwingend das "Mitdrehen" des Kunststoffdichtkörpers mit der Welle zu vermeiden, wird bei der Herstellung dieser Bauform eine gewisse "Ausschussquote" billigend in Kauf genommen.

Das nach längerer Einsatzzeit eintretende, teilweise Mitdrehen des Dichtkörpers aus Polytetrafluorethylen (PTFE), führt zu einer kontinuierlichen Zerstörung dieses Dichtkörpers, und hat dann daraus resultierende Leckagen zur Folge.

Ein weiterer Nachteil der vorgenannten Lösung besteht aber auch darin, dass insbesondere bei Einsatz von neuartigen Kühlflüssigkeiten (schwach schmierenden Medien) ab Drehzahlen von über 7.000 U/min beim wasserseitig angeordneten Elastomerdichtkörper, der Flüssigkeitsfilm zwischen der Welle/Hülse und dem Dichtzylinder abreißt, so dass, wie in Testreihen auf Prüfständen zuverlässig nachgewiesen werden konnte, bereits ab ca. 7.500 U/min ein sehr deutlicher Temperaturanstieg an der jeweiligen Dichtung eintritt, der eine thermische Schädigung des Kühlmittels mit einer daraus resultierenden Belagsbildung auf der Wellenoberfläche (z.B. Silikate aus dem thermisch geschädigten Kühlmittel) und daraus resultierende Leckagen zur Folge hat.

Auch in der JP H10-318 377 A und der JP 2009-68 643 A werden Radialwellendichtungen mit zwei unterschiedlichen Dichtkörpern, d.h. einem aus einem Elastomer und einem zweiten aus einem Kunststoff vorbeschrieben. Bei der Lösung nach der JP H10-318 377 A wird die Dichtfläche des druckseitig/wasserseitig angeordneten Elastomerdichtkörpers, ebenso wie bei der eingangs beschriebenen Bauformen auch, mittels einer im Bereich oberhalb der Dichtfläche angeordneten Schnurfeder, hier direkt gegen die Welle, verspannt.

Auch diese Lösung weist daher zwangsläufig, die bereits in Verbindung mit dem Einsatz der Schnurfedern bei den Eingangs beschriebenen Lösungen erläuterten Nachteile, wie eine aus der Umfangskraft der Schnurfeder am Außenumfang der Elastomerdichtfläche resultierende erhöhte Reibung im Bereich der Elastomerdichtfläche auf, welche dann zwangsläufig mit den Reibungsverlusten einhergehende Temperaturerhöhungen und auch die damit verbundene Leistungsverluste zur Folge hat.

Ein wesentliches, gemeinsames Merkmal der beiden letztgenannten Lösungen ist, dass die jeweiligen Elastomerdichtkörper stets auf Ringbundscheiben aufvulkanisiert sind. Dies erfordert bei beiden Bauformen einen zusätzlichen Vulkanisierprozess, wodurch mit deren Herstellung zwangsläufig auch ein deutlich erhöhter Fertigungsaufwand, aber auch ein deutlich erhöhter Aufwand beim Recycling verbunden ist.

Bei beiden Lösungen wird die Vorspannung des aufvulkanisierten Elastomers genutzt, um die zweite, die luftseitig angeordnete Dichtung aus einem Kunststoff, beispielsweise eine PTFE Dichtung in der jeweiligen Ringbundscheibe zu verspannen.

Zur Endmontage der jeweiligen Dichtung wird gemäß der JP H10-318 377 A in die Ringbundscheibe mit dem aufvulkanisierten Dichtkörper, zwischen dem luftseitigen Bund der Ringbundscheibe, d.h. der Rückwand und dem Elastomerdichtkörper, die zweite Dichtung eingelegt und im Bereich des Außenumfangs des Elastomerkörper mittels eines Stützringes gegen den Elastomerkörper verspannt.

Bei der Lösung nach JP H10-318 377 A laufen zudem die Dichtzylinder beider Dichtungen direkt auf der Welle und sind allein dadurch einem erhöhten Verschleiß unterworfen.

Die Lösung nach der JP 2009-68 643 A weist gegenüber der Lösung nach der JP H10-318 377 A zudem einen deutlich schmaleren Ringbund auf.

Daher ist bei dieser Lösung zwingend eine weitere, d.h. eine zweite Ringscheibe zwischen dem Ringbund und der luftseitigen Kunststoff-Dichtung erforderlich um die luftseitige Kunststoff-Dichtung sicher in der Ringbundscheibe gegen das an der Ringbundscheibe aufvulkanisierte Elastomer zu verspannen.

Da jedes Elastomer einen sogenannten Druckverformungsrest (DVR) besitzt, führt dies dazu, dass die Vorspannung der Elastomerdichtung über die Laufzeit/Einsatzzeit der Dichtung geringer wird.

Dieser Vorspannungsverlust ist sehr stark temperaturabhängig und geht daher um so schneller, je höher die Temperatur ist, unter der die Dichtung eingesetzt wird.

Daraus resultiert zwangsläufig, dass beim Einsatz dieser Dichtungen in Wasserpumpen für Kraftfahrzeuge, aufgrund der dort herrschenden Temperaturen von -40°C bis +135°C mit steigender Einsatzzeit die Vorspannung des Elastomers nicht mehr ausreicht um ein, in Verbindung mit der EP 2817539 B1 bereits erläutertes, "Mitdrehen" der luftseitigen Dichtung aus Kunststoff mit der Welle in der Ringbundscheibe zu unterbinden.

Bei den in der JP 2009-68 643 A eingesetzten Dichtungen handelt es sich ausschließlich um reine Lippendichtungen an deren Dichtkörper keine Schnurfedern angeordnet sind.

Auch bei den Lösungen nach der US 20110215536 A1 und der US 9695935 B2 werden ebenso wie bereits bei der Lösung nach der JP 2009-68 643 A zwei ringförmige Dichtkörper eingesetzt, deren Dichtlippen nicht durch Schnurfedern belastet werden, wobei die Lösung nach der US 20110215536 A1, ebenso wie die Lösung nach der JP 2009-68 643 A, direkt an der Welle, und die Lösung nach der US 9695935 B2 an einer Laufhülse anliegen, und dabei im anliegenden Bereich, stets einen zur Druckseite hin ausgeformten flächigen Dichtzylinder ausbilden.

Auch bei den Lösungen nach der US 20110215536 A1 und der US 9695935 B2 ist ebenfalls in einem Dichtungsgehäuse luftseitig, als Rückwand, wiederum ein schmaler Ringbund angeordnet. Mit diesem Ringbund werden wiederum zwei Stützringe, einer luftseitig und einer wasserseitig, drehfest verbunden.

Zwischen diesen wird der luftseitig angeordnete mit einer Dichtlippe versehene Dichtkörper aus Kunststoff nun dadurch verspannt, dass der zweite, wasserseitig angeordnete Elastomerdichtkörper zwischen dem wasserseitigen Stützring und dem Dichtungsgehäuse separat eingepresst und anschließend, mittels eines weiteren zwischen dem Elastomerdichtkörper und dem Dichtungsgehäuse angeordneten Bauteils, einem Adapter, elastisch verspannt in seiner Lage gesichert wird.

Ein sehr wesentlicher Nachteil dieser Lösungen besteht nun in der eben erläuterten elastischen Lagesicherung des Adapters.

Das bereits beschriebene Nachlassen der Vorspannung jeder Elastomerdichtung über die Laufzeit/Einsatzzeit in Wasserpumpen bei Kraftfahrzeuge führt mit steigender Einsatzzeit dazu, dass infolge des Nachlassens der Vorspannung des Elastomers, bei dieser Bauform dann der Adapter aus seiner elastischen Verspannung herausfällt, und dadurch die Dichtung (die dann auf der Wellenhülse "auseinander fällt") ihre Dichtwirkung verliert.

Die Lösung nach der JP 2009-68 643 A wie auch die Lösungen nach der US 20110215536 A1 und der US 9695935 B2 besitzen stets einen wasserseitig/druckseitig angeordneten Elastomerdichtkörper mit einer Elastomerdichtlippe und einen diesem luftseitig benachbart angeordneten Kunststoffdichtkörper mit einer Kunststoffdichtlippe. Zwischen beiden Lippen wird eine geringe Menge handelsüblichen Schmierfettes eingebracht, welches zur Kurzzeitschmierung der Elastomer-Lippe dient.

Auch bei diesen Lösungen, bei denen die Elastomerdichtlippe flächig an der Welle bzw. der Laufhülse anliegt, tritt in Verbindung mit den neuen Kühlflüssigkeiten (schwach schmierenden Medien), wie bereits im Zusammenhang mit den eingangs analysierten Lösungen erläutert, bei höheren Drehzahlen, d.h. bei Drehzahlen von über 7.000 U/min, wiederum nach bereits kurzer Einsatzzeit ein erhöhter Verschleiß auf, der auf Mischreibungszustände bis hin zu einem Trockenreibungsverschleiß zurückzuführen ist und der zu einer Schädigung durch "Verbrennen" der Lippendichtungen und zu einer thermischen Schädigung des Kühlmittels mit den daraus resultierenden Leckagen führt.

Darüber hinaus haben auch die reinen Elastomerlippendichtungen (d.h. die ohne eine Schnurfeder auf der wasserseitigen Dichtlippe), ob die gemäß der Lösung nach der JP 2009-68 643 A oder die gemäß der Lösungen nach der US 20110215536 A1 und der US 9695935 B2, den Nachteil, dass jedes Elastomer einen Druckverformungsrest (DVR) besitzt, der dazu führt, dass die Vorspannung in Abhängigkeit von der Höhe der Einsatztemperatur und der Laufzeit geringer wird, wodurch bei der Arbeitstemperatur des Kühlmittels und mit zunehmender Laufzeit die Vorspannung der Dichtlippe gegenüber der Welle oder der Laufhülse sich deutlich reduziert.

Dadurch kommt es an der wasserseitigen Dichtlippe teilweise zu einem Eigenschwingverhalten und einem damit verbundenen Quietschen der Dichtung und bei fehlendem Systemdruck, d.h. bei stehendem Motor, zu Leckagen und infolge dessen zu daraus resultierenden Reklamationskosten. Der Sachverhalt der Leckage im Stillstand führt aber auch zu einer deutlichen Reduzierung der Unterdruckstabilität.

Diese Unterdruckstabilität ist zwar bei Neufahrzeugen stets gegeben, und ermöglicht, dass die Erstbefüllung der Kühlsysteme derart erfolgen kann, dass das Kühlsystem mittels einer Saugpumpe evakuiert, auf Dichtheit geprüft, und anschließend unter Nutzung des erzeugten Unterdruckes luftfrei mit Kühlmittel befüllt werden kann.

Selbstverständlich haben die beschriebenen Verschleißerscheinungen an den Dichtlippen keine Auswirkungen auf die Erstbefüllung.

Da jedoch bereits viele Werkstätten im Rahmen von Instandsetzungs- bzw. Instandhaltungsarbeiten auch mit Unterdruck luftfrei befüllen, führen die oben erläuterten Verschleißerscheinungen mit Stillstandsleckagen dazu, dass in Abhängigkeit von der Laufzeit und den jeweiligen Einsatzbedingungen, über z.B. undichte verschlissene Dichtlippen mehr oder weniger Luft, mit den daraus resultierenden Nachteilen, in den Kühlkreislauf gelangt.

Ein weiterer Nachteil aller o.g. Bauformen besteht darin, dass diese den gestiegenen Anforderungen im Automotivebereich, in Verbindung mit verbrauchsoptimierten Verbrennungsmotoren und E-Fahrzeugen, nach einem immer geringeren Platzbedarf, immer geringeren Leistungsverlusten, einer immer längeren Lebensdauer bei einem gleichzeitig sinkenden Gewicht nur noch sehr begrenzt, zumeist überhaupt nicht mehr gerecht werden können.

Die im Automotivebereich geforderten kleineren Bauformen von Radialwellendichtungen sind durch Wellendurchmesser von 9 mm und darunter (bis zu 3 mm) gekennzeichnet, da mit solch kleinen Wellendurchmesser die Anforderung nach weniger Gewicht, wesentlich geringeren Reibungs- und damit einhergehende Leistungsverlusten, wie auch nach einem deutlich geringeren Verschleiß der mit dem Wellendurchmesser, auf Grund der sinkenden Umfangsgeschwindigkeiten, ebenfalls sinkt, erfüllt werden können.

Derart "kleinere" Dichtungen, d.h. Dichtungen für Wellendurchmesser von 3 mm bis 9 mm, sind auch dort gefordert, wo elektrisch angetrieben Zusatzpumpen, ob Wasser- oder Ölpumpen, mit geringer elektrischer Antriebsleistung eingesetzt werden sollen.

Ein anderes Problem, tritt beispielsweise bei neuen Lagerkonzepten in Verbindung mit dem Einsatz von elektrischen Wasserpumpen auf und besteht darin, dass bei diesen Einsatzfällen die Dichtungen axiale Verschiebungen der Welle von bis zu 2 mm ausgeglichen müssen.

Auch besteht heute zudem die technische Aufgabe darin, möglichst kleine Gleitlager, ob aus Kupfer, Sintermetall oder Kunststoff, welche über eine technisch bedingte Wärmeentwicklung verfügen, abzudichten, und mit für diesen Einsatzfall geeigneten "kleinen" Radialwellendichtungen zu kombinieren.

Doch diese Anwendungsfälle der "kleinen" Radialwellendichtungen mit Wellendurchmessern im Bereich von 9 mm bis 3 mm, die gegenüber den heutigen Bauformen auch axiale Verschiebungen der Wellen, d.h. axiale Wellenbewegungen ausgleichen sollen, erfordern zwangsläufig völlig neuartige Radialwellendichtungsbauformen.

So erfordern die, gegenwärtig in Verbindung mit Wellendurchmessern von über 9 mm im Stand der Technik eingesetzten Bauformen, zwangsläufig Hinterschnitte.

Diese Hinterschnitte führen jedoch bei kleineren Bauformen (mit Wellendurchmessern von gleich/kleiner 9 mm) auf Grund geringer werdender Materialstärken zu erhöhten Ausschussquoten bei der Vulkanisierung, da sowohl bei der manuellen wie auch der maschinellen Entformung von kleinen Bauteilen das Elastomer sehr leicht einreißt. Die in den kleiner werdenden Hinterschnitten zu montierenden Stützbauteile, ob aus Kunststoff oder Metall, lassen sich mit der für diese kleinen Baugrößen erforderlichen Genauigkeit auch nicht mehr effizient herstellen.

Derart kleine Kunststoffteile sind dann zwangsläufig auch nicht mehr ausreichend stabil um einerseits die anliegenden Kräfte wie aber auch die Temperaturunterscheide ausgleichen zu können.

Auch erlaubt der heutzutage für die gesamte "kleine" Dichtung vorgegebene Bauraum, d.h. ein bei diesen kleinen Wellendurchmessern von 9 mm bis 3 mm vorgegebener Außen-/Bohrungsdurchmesser von 16 mm bis 8 mm, keine, wie bei den größeren Dichtungen üblich, radiale Überlappung von mehreren Bauteilen, da deren Materialdicken für die Fertigung wie auch die Montage einfach zu klein werden.

Dabei ist auch zu berücksichtigen, dass die für eine effektive Fertigung zwingend erforderlichen Mindesttoleranzen bei Metall-, Kunststoff und Elastomerbauteilen auch bei einer Miniaturisierung der Dichtung nicht kleiner werden, so dass sich diese Mindesttoleranzen bei kleiner werdenden Dichtungen (Dichtungsdurchmessern) selbstverständlich entsprechend stärker negativ auswirken.

Bei den "kleinen" Dichtungen müssen daher auch die Toleranzketten so minimal wie möglich gehalten werden. Die gegenwärtig Einsatz findenden "größeren" Dichtungen haben oftmals relativ große Toleranzketten die sich bei den Bauformen des Standes der Technik entsprechend negativ sowohl auf die Produktion wie auch auf die Funktion der Dichtungen auswirken, aber vom Hersteller und vom Anwender derzeit noch toleriert werden müssen/können. Da zudem für die kleineren Dichtungen auch die gleichen Druck- und Einsatzbedingungen gelten, aber geringere Materialstärken zwingend erforderlich werden, sind, wie oben erläutert, die im Stand der Technik üblichen Konstruktionsvarianten für Radialwellendichtungen bei den heute bekannten Dichtungsbauformen, bei denen größere Wellen- und Bohrungsdurchmesser und daher auch größere Materialstärken Einsatz finden, für die immer kleiner werdenden Wellendurchmesser nicht geeignet.

Die Aufgabe der Erfindung besteht daher darin eine neuartige Radialwellendichtung zur Abdichtung einer aus einem mit einem fluiden Medium gefüllten Raum herausgeführten rotierenden Welle gegenüber der Atmosphäre zu entwickeln, welche sowohl zur Abdichtung von Öl- oder ölähnlichen Medien, aber auch für Kühlmittelpumpen, unter Einsatz von dünnflüssigen, wasserbasierenden Kühlmitteln mit leicht schmierenden Zusätzen, die vorgenannten Nachteile des Standes der Technik beseitigen soll, und auch die in Verbindung mit kleinen Wellendurchmessern, d.h. Wellendurchmessern von 9 mm bis 3 mm die Leistungs- und Leckageverluste deutlich senkt, dabei zudem axiale Wellenbewegungen sehr gut ausgleicht, gleichzeitig die Zuverlässigkeit wie auch die Lebensdauer deutlich erhöht, zudem Stillstandsleckagen zuverlässig vermeidet, und selbst nach längerer Einsatzzeit noch eine "luftfreie" Vakuumbefüllung von Kühlmittelpumpen auch mit kleinem Wellendurchmessern im Bereich von 9 mm bis 3 mm gewährleistet, wobei diese zu entwickelnde neuartige Radialwellendichtung zudem auch noch fertigungstechnisch sehr einfach herstell- und montierbar sein soll, so dass neben den Fertigungskosten auch die Montagekosten in der Endfertigung gegenüber den gegenwärtigen Lösungen des Standes der Technik deutlich reduziert werden können.

Erfindungsgemäß wird diese Aufgabe durch eine Radialwellendichtung nach den Merkmalen des Hauptanspruches der Erfindung gelöst.

Vorteilhafte Ausführungen, Einzelheiten und Merkmale der Erfindung ergeben sich aus den Unteransprüchen sowie der nachfolgenden Beschreibung der erfindungsgemäßen Lösung an Hand mehrerer Ausführungsbeispiele in Verbindung mit den zugehörigen zeichnerischen Darstellungen, die den Einsatz der erfindungsgemäßen Lösung in mehreren Ausführungsformen zeigt.

Nachfolgend wird die Erfindung an Hand mehrerer Ausführungsbeispiele in Verbindung mit 13 Figuren näher erläutert.

Es zeigen dabei:
- Figur 1 :: die erfindungsgemäße, in einer Senkbohrung im Arbeitsgehäuse 2 einer Kühlmittelpumpe, angeordnete Radialwellendichtung, mit einem Wellendurchmesser der Welle 3 von 6 mm und einem Bohrungsdurchmesser der Senkbohrung von 13 mm, nach deren Einbau in der Seitenansicht im Schnitt;
- Figur 2 :: die erfindungsgemäße Radialwellendichtung als Zweilippensystem mit einer anderen Bauform des Klemmpositionierungsring 23 mit einem dazwischen angeordneten Gleitlager 42 nach dem Einbau in einer Hülse 41, in der Seitenansicht im Schnitt;
- Figur 3 :: die erfindungsgemäße, in einem Dichtungsgehäuse 5 mit Montagebund, für einen Dichtungssitz in einem Arbeitsgehäuse 2 mit einem Bohrungsdurchmesser von 16 mm, und einem Wellendurchmesser der Welle 3 von 8 mm angeordnete, Radialwellendichtung nach dem Einbau in einem Arbeitsgehäuse 2 einer Kühlmittelpumpe, in der Seitenansicht im Schnitt;
- Figur 4 :: die erfindungsgemäße Radialwellendichtung während der Montage, mit dem in einem Dichtungsgehäuse 5 mit Montagebund, durch den Stützkörper 13 lagesicher positionierten Kunststoffdichtkörper 9, in der Seitenansicht, im Schnitt;
- Figur 5 :: eine analog zu Figur 3 aufgebaute erfindungsgemäße Radialwellendichtung im Endmontagezustand/ Auslieferungszustand, d.h. vor dem Einbau in ein Arbeitsgehäuse 2 einer Kühlmittelpumpe, in der Seitenansicht im Schnitt;
- Figur 6 :: die Einzelheit Z der erfindungsgemäßen Radialwellendichtung gemäß der Darstellung in Figur 5;
- Figur 7 :: die Einzelheit Y der erfindungsgemäßen Radialwellendichtung gemäß der Darstellung in Figur 5;
- Figur 8 :: eine analog zu Figur 3 aufgebaute erfindungsgemäße Radialwellendichtung in einer laserverschweißten Ausführungsform im Endmontagezustand/ Auslieferungszustand, d.h. vor dem Einbau in ein Arbeitsgehäuse 2 einer Kühlmittelpumpe, in der Seitenansicht im Schnitt;
- Figur 9 :: die Einzelheit X der erfindungsgemäßen Radialwellendichtung gemäß der Darstellung in Figur 8;
- Figur 10 :: die Draufsicht auf die in der Figur 8 im Endmontagezustand dargestellte erfindungsgemäße Radialwellendichtung;
- Figur 11 :: eine weitere erfindungsgemäße, analog zu Figur 5 und Figur 8 aufgebaute, Radialwellendichtung jedoch mit am Umfang des Dichtungsgehäuses 5 angeordneten Fixierkegeln in Form von Positionierkerben 39, im Endmontagezustand/ Auslieferungszustand, d.h. vor dem Einbau in ein Arbeitsgehäuse 2 einer Kühlmittelpumpe, in der Seitenansicht im Schnitt;
- Figur 12:: die Einzelheit W der erfindungsgemäßen Radialwellendichtung gemäß Figur 11;
- Figur 13:: die Draufsicht auf die in der Figur 11 im Endmontagezustand dargestellte erfindungsgemäße Radialwellendichtung;
- Figur 14:: den Temperaturverlauf über die Drehzahl bei der Radialwellendichtung nach dem Stand der Technik (gemäß EP 2817539 B1);
- Figur 15:: den Temperaturverlauf über die Drehzahl bei der erfindungsgemäßen Radialwellendichtung.

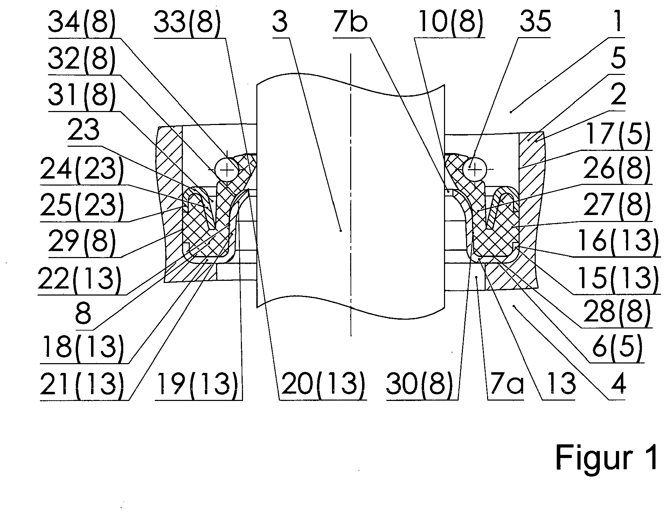

Die Figur 1 zeigt die erfindungsgemäße, in einer Senkbohrung im Arbeitsgehäuse 2 einer Kühlmittelpumpe angeordnete Radialwellendichtung, mit einem Wellendurchmesser von 6 mm und einem Bohrungsdurchmesser der Senkbohrung von 13 mm, nach deren Einbau in der Seitenansicht im Schnitt. Bei diesem Ausführungsbeispiel ist kennzeichnend, dass die Bohrung im Arbeitsgehäuse 2 als zylindrische Senkbohrung ausgeführt ist, so dass diese das Dichtungsgehäuse 5 mit seiner Rückwand 6 und der in der Rückwand 6 angeordneten Wellendurchtrittsbohrung 7a direkt ausbildet.

Die erfindungsgemäße Radialwellendichtung zur Abdichtung, einer aus einem mit einem fluiden Medium gefüllten Druckraum 1 eines Arbeitsgehäuses 2 herausgeführten rotierenden Welle 3 gegenüber einem Außenraum 4, der Atmosphäre, mit einem in einer Bohrung des Arbeitsgehäuses 2 angeordneten Dichtungsgehäuse 5 mit einer Rückwand 6 und einer in dieser Rückwand 6 angeordneten Wellendurchtrittsbohrung 7a, wobei im Dichtungsgehäuse 5 mindestens ein Elastomerdichtkörper 8 mit einer druckraumseitig angeordneten Elastomerdichtlippe 10 derart angeordnet ist, dass diese Elastomerdichtlippe/n 10 direkt an der Welle 3 oder einer auf der Welle 3 drehfest angeordneten Laufhülse 12 anliegt/anliegen, wobei der Elastomerdichtkörper 8 in seiner Lage gegenüber dem Dichtungsgehäuse 5 mittels eines mit einer ringförmigen Wellendurchtrittsbohrung 7b versehenen metallischen Stützkörpers 13 exakt lagepositioniert ist, zeichnet sich dadurch aus, dass dichtungsgehäuseseitig am äußeren Rand des Stützkörpers 13 ein Stützkörperfixierbund 15 mit einem Stützkörperfixierzylinder 16 angeordnet ist, wobei der Außendurchmesser des Stützkörperfixierzylinders 16 gegenüber dem Innendurchmesser der zugeordneten Innenwand 17 des Dichtungsgehäuses 5 ein Übermaß aufweist, so dass der Stützkörper 13, welcher im Endmontagezustand mit seinem Stützkörperfixierzylinder 16 im Inneren des Dichtungsgehäuses 5 mit Presssitz kraftschlüssig gefügt ist, wobei der Stützkörper 13 mit einem sich radial an den Stützkörperfixierbund 15 anschließenden Stützkörpersteg 18 versehen ist, und am Stützkörpersteg 18 des Stützkörpers 13 innen ein Stützkörperpositionierzylinder 21 mit einem Stützkörperpositionierzylinderaußenmantel 22 angeordnet ist.

Wesentlich ist in diesem Zusammenhang, dass dem Stützkörperpositionierzylinder 21 druckraumseitig benachbart, zwischen dem druckraumseitigen Ende des Stützkörperpositionierzylinders 21 und dem freien, druckraumseitig mit einer Wellendurchtrittsbohrung 7b versehenen Ende des Stützkörpers 13, ein sich in Richtung des Druckraumes 1, d.h. zur Wellendurchtrittsbohrung 7b hin, verjüngender Stützbund 19 am Stützkörperpositionierzylinders 21 angeordnet ist, der an seinem freien, druckraumseitigen mit der Wellendurchtrittsbohrung 7b im Stützkörper 13 versehenen Ende einen Stützbundrand 20 aufweist.

Kennzeichnend ist dabei, dass der Elastomerdichtkörper 8 einen Dichtkörperpositionierzylinder 27 aufweist, der außenraumseitig mit seiner Stirnseite 28 am Stützkörpersteg 18 anliegt, und der radial mit seinem Innenmantel 30 gegenüber dem Stützkörperpositionierzylinderaußenmantel 22 und mit seinem Außenmantel 29 radial gegenüber der Innenwand 17 des Dichtungsgehäuses 5 verspannt ist.

Erfindungswesentlich ist, dass am Dichtkörperpositionierzylinder 27 des Elastomerdichtkörpers 8 druckraumseitig ein Klemmpositionierungsring 23 angeordnet ist, der mit einem am Klemmpositionierungsring 23 innen, d.h. wellenseitig angeordneten Positioniersteg 24 in eine druckraumseitig am Dichtkörperpositionierzylinder 27 des Elastomerdichtkörpers 8 angeordnete ringförmige Freimachung 31 eingereift, welche parallel zum Stützkörperpositionierzylinder 21 verläuft und in den Elastomerdichtkörper 8 bis oberhalb des Stützkörperpositionierzylinder 21 hineinreicht und dabei am Elastomerdichtkörper 8 einen am Stützkörperpositionierzylinder 21 anliegenden Vorspanndichtsteg 26 ausbildet, an dem druckraumseitig die Elastomerdichtlippe 10 angeordnet ist.

Erfindungsgemäß ist am Klemmpositionierungsring 23 außen, d.h. dem Positioniersteg 24 gehäuseseitig gegenüberliegend, ein Klemmringfixierzylinder 25 angeordnet, dessen Außendurchmesser gegenüber dem Innendurchmesser der zugeordneten Innenwand 17 des Dichtungsgehäuses 5 ein Übermaß aufweist, so dass auch dieser im Endmontagezustand im Inneren des Dichtungsgehäuse 5 mittels Presssitz gefügt ist.

Wesentlich ist auch, dass der Vorspanndichtsteg 26 des Elastomerdichtkörpers 8 am Stützkörperpositionierzylinderaußenmantel 22 des Stützkörperpositionierzylinders 21 anliegt.

Kennzeichnend ist auch, dass am Vorspanndichtsteg 26 ein im Bereich oberhalb des Stützbundes 19 angeordneter, frei tragender Spannbogensteg 32 angeordnet ist, der oberhalb des Stützbundrandes 20 in einen ebenfalls frei tragenden Stützbogensteg 33 übergeht, an dem druckraumseitig dann die Elastomerdichtlippe 10 angeordnet ist, welche an der Welle 3 anliegt, wobei oberhalb des Stützbogensteges 33 am Außenumfang des Elastomerdichtkörpers 8 eine Außennut 34 angeordnet ist, in der eine Schnurfeder 35 angeordnet ist, die neben dem Stützbogensteg 33 auch gleichzeitig den frei tragenden Spannbogensteg 32 des Elastomerdichtkörpers 8 vorspannt, und dabei die Elastomerdichtlippe 10 federelastisch gegen die Welle 3 verspannt.

Diese in der Figur 1 dargestellte, Bauform der erfindungsgemäßen Radialwellendichtung gewährleistet die axiale Sicherung der Bauteile ohne Hinterschnitt, und ermöglicht auf Grund der fehlenden Hinterschnitte zur axialen Sicherung der Radialwellenpumpe, einerseits eine kleine radiale Toleranzkette und gleichzeitig eine fehlerarme Herstellung selbst kleiner Elastomerteile, da die Hinterschnitte die Hauptfehlerursache für Risse beim Entformen der Bauteile aus dem Vulkanisationswerkzeug sind.

Mit zunehmender Miniaturisierung der Elastomerteile verstärken sich diese Nachteile überproportional.

Zudem erlaubt die erfindungsgemäße Radialwellendichtung eine optimale Montagereihenfolge, d.h. eine Montage nacheinander, bei der keine Baugruppen einzeln vormontiert werden müssen.

Alle Montageschritte, die eine Mindestkraft beim Einpressen in das Dichtungsgehäuse 5 erfordern, können stets direkt auf die Metallteile ausgeführt werden.

Es gibt bei der erfindungsgemäßen Lösung keine Einpressvorgänge, welche direkt auf das Elastomerteil pressen.

Dadurch kann mittels der erfindungsgemäßen Lösung die Genauigkeit bei der Montage erhöht werden.

Gleichzeitig ist eine Kontrolle der Montageschritte besser möglich, da man feste Messpunkte hat und nicht auf dem Elastomer messen muss.

Die durch die erfindungsgemäße Lösung wird eine wesentlich vereinfachte Fertigung und Montage der Dichtung bei geringe Ausschussquoten in der Produktion gewährleistet.

Die erfindungsgemäße hochelastischen Ausbildung des erfindungsgemäßen Vorspanndichtsteges 26, mit dem erfindungsgemäß frei tragenden Spannbogensteg 32 und dem sich an diesen anschließenden, ebenfalls frei tragenden, und mit einer Schnurfeder 35 erfindungsgemäß vorgespannten Stützbogensteg, mit der an dessen freien Ende angeordneten, hochelastisch, vorgespannten, Elastomerdichtlippe 10 erlaubt erstmals axiale Verschiebungen der Welle 3 im Bereich von 10 % bis 20 % des Wellendurchmessers.

All diese erfindungsgemäßen Eigenschaften ermöglichen den Einsatz der erfindungsgemäßen Radialwellendichtung auch zur Abdichtung von Gleitlagerungen elektrisch angetriebener Wellen.

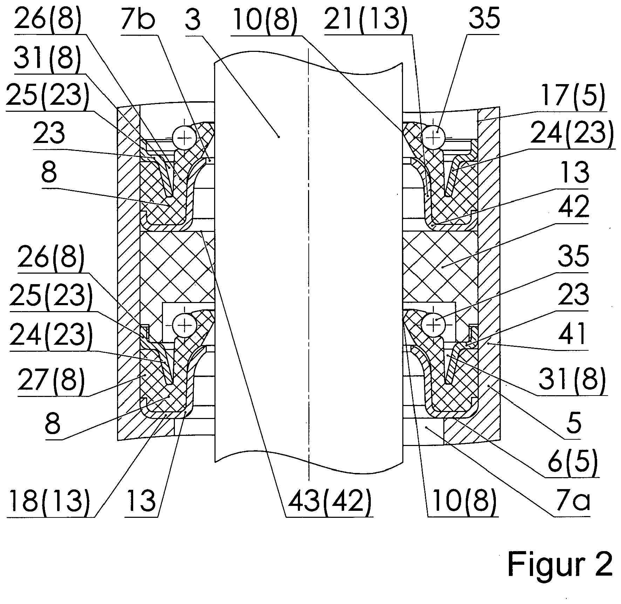

Die Figur 2 zeigt nun einen solchen Einsatzfall der erfindungsgemäßen Radialwellendichtung in Verbindung mit einer Gleitlagerung einer elektrisch angetriebenen Welle.

Der hier dargestellte Einsatzfall zeigt die erfindungsgemäße Radialwellendichtung in der Bauform als Zweilippensystem mit einem dazwischen angeordneten Gleitlager 42.

Bei diesem Ausführungsbeispiel wurde eine gegenüber der Figur 1 andere Bauform des Klemmpositionierungsring 23 mit einem veränderten Klemmringfixierzylinder 25 eingesetzt.

Dieses System ist in einer Hülse 41, vor deren Montage im Arbeitsgehäuse 2 einer Kühlmittelpumpe eingebaut, und in der Figur 2 in der Seitenansicht im Schnitt dargestellt.

Erfindungsgemäß wird das Dichtungsgehäuse 5 mit seiner Rückwand 6 und einer in dieser Rückwand 6 angeordneten Wellendurchtrittsbohrung 7a in diesem Ausführungsbeispiel von einer Hülse 41 aus Metall ausgebildet.

Diese Hülse 41 ist dann im Endmontagezustand flüssigkeitsdicht in einer Bohrung des Arbeitsgehäuses 2 angeordnet.

Kennzeichnend dabei ist, dass in dieser Hülse 41 eine analog dem vorangegangenen Ausführungsbeispiel ausgebildete Radialwellendichtung angeordnet ist, der druckraumseitig ein Gleitlager 42 derart benachbart angeordnet ist, dass dieses axial am Klemmpositionierungsring 23 anliegt, wobei an diesem Gleitlager 42 druckraumseitig eine Gleitlagerrückwand 43 angeordnet ist, an der der Stützkörper 13 einer weiteren, in der Hülse 41 analog dem vorangegangenen Ausführungsbeispiel erfindungsgemäß ausgebildeten Radialwellendichtung, axial anliegt.

Wie in Verbindung mit Figur 1 bereits erläutert, ist auch hier wieder am Dichtkörperpositionierzylinder 27 des Elastomerdichtkörpers 8 druckraumseitig ein Klemmpositionierungsring 23 angeordnet, der mit einem am Klemmpositionierungsring 23 innen, d.h. wellenseitig angeordneten Positioniersteg 24 in eine druckraumseitig am Dichtkörperpositionierzylinder 27 des Elastomerdichtkörpers 8 angeordnete ringförmige Freimachung 31 eingereift, welche parallel zum Stützkörperpositionierzylinder 21 verläuft und in den Elastomerdichtkörper 8 bis oberhalb des Stützkörperpositionierzylinders 21 hineinreicht, und dabei am Elastomerdichtkörper 8 einen am Stützkörperpositionierzylinder 21 anliegenden Vorspanndichtsteg 26 ausbildet, an dem druckraumseitig die Elastomerdichtlippe 10 angeordnet ist. Erfindungswesentlich ist, dass am Klemmpositionierungsring 23 außen, d.h. dem Positioniersteg 24 gehäuseseitig gegenüberliegend, ein Klemmringfixierzylinder 25 angeordnet ist, dessen Außendurchmesser gegenüber dem Innendurchmesser der zugeordneten Innenwand 17 des Dichtungsgehäuses 5 ein Übermaß aufweist, so dass auch dieser Klemmpositionierungsring 23 im Endmontagezustand im Inneren des Dichtungsgehäuses 5 mittels Presssitz hier in der Hülse 41 fest gefügt ist. Wesentlich bei der Montage der erfindungsgemäßen Elastomerdichtkörper in der Hülse 41 ist, dass auch keine der Dichtungsbaugruppen einzelne vormontiert werden müsste.

Die Montagereihenfolge der erfindungsgemäßen Radialwellendichung erlaubt eine Montage nacheinander.

Wesentlich ist auch, dass alle Montageschritte, die eine Mindestkraft beim Einpressen in das Dichtungsgehäuse 5 erfordern, können direkt auf die dem Elastomer benachbarten stabilen Metallauteile aufgebracht werden.

Es gibt keine Einpressvorgänge, die direkt auf das Elastomerteil pressen. Dadurch ist bei der Montage eine hohe Genauigkeit gewährleistet.

Jeder Montageschritt kann exakt kontrolliert werden, da man feste Messpunkte hat und nicht auf dem Elastomer messen muss.

Neben einer einfache Montage wird so gleichzeitig eine hohe Qualität gewährleistet, wodurch die Ausschussquote in der Produktion minimiert werden kann.

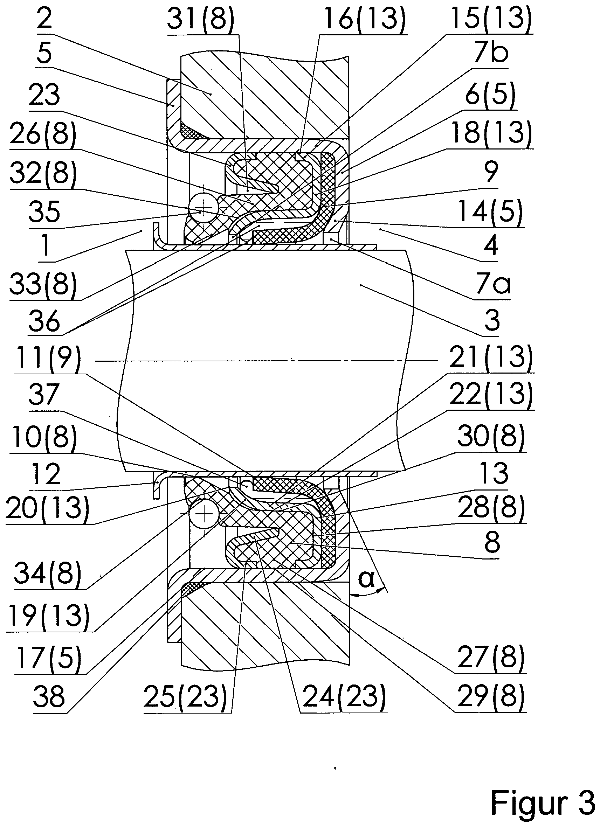

In der Figur 3 ist nun die erfindungsgemäße, in einem Dichtungsgehäuse 5 mit Montagebund, für einen Dichtungssitz in einem Arbeitsgehäuse 2 mit einem Bohrungsdurchmesser von 16 mm, und einem Wellendurchmesser der Welle 3 von 8 mm angeordnete, Radialwellendichtung nach dem Einbau in einem Arbeitsgehäuse 2 einer Kühlmittelpumpe, in der Seitenansicht im Schnitt, dargestellt.

Die erfindungsgemäße Radialwellendichtung zur Abdichtung einer aus einem mit einem fluiden Medium gefüllten Druckraum 1 eines Arbeitsgehäuses 2 herausgeführten rotierenden Welle 3 gegenüber dem Außenraum 4, der Atmosphäre, mit einem in einer Bohrung des Arbeitsgehäuses 2 angeordneten metallischen Dichtungsgehäuse 5 mit einer Rückwand 6 und einer in dieser Rückwand 6 angeordneten Wellendurchtrittsbohrung 7a, zeichnet sich dadurch aus, dass im Dichtungsgehäuse 5 druckraumseitig ein Elastomerdichtkörper 8 mit einer Elastomerdichtlippe 10 und außenraumseitig ein Kunststoffdichtkörper 9 mit PTFE und einer Kunststoffdichtlippe 11 derart angeordnet sind, dass diese Dichtlippen, die Elastomerdichtlippe 10 wie auch die Kunststoffdichtlippe 11, direkt an der Welle 3, oder wie in diesem Ausführungsbeispiel dargestellt, an einer auf der Welle 3 drehfest angeordneten Laufhülse 12 anliegen, wobei die beiden Dichtkörper, der Elastomerdichtkörper 8 und der Kunststoffdichtkörper 9, in ihrer Lage gegenüber dem Dichtungsgehäuse 5 mittels eines mit einer ringförmigen Wellendurchtrittsbohrung 7b versehenen metallischen Stützkörpers 13 exakt lagepositioniert sind.

Wesentlich ist, dass im Bereich der Wellendurchtrittsbohrung 7a an der Rückwand 6, ein kegelstumpfförmig in Richtung des Druckraumes 1, unter einem Anlagekegelwinkel α, ein im Bereich von 25° bis 38° geneigter Dichtkörperanlagebund 14 angeordnet ist.

In den hier in den Ausführungsbeispielen beschrieben Bauformen der erfindungsgemäßen Lösung liegt der Anlagekegelwinkel α, im Bereich von 25° bis 28°. Der unter dem Anlagekegelwinkel α geneigte Dichtkörperanlagebund 14 bewirkt eine gesollte Verformung des Kunststoffdichtkörpers 9, der im vorliegenden Ausführungsbeispiel aus Polytetrafluorethylen (PTFE) besteht, in Richtung des Druckraumes 1, so dass er selbst unter druckraumseitiger Druckbeaufschlagung seine optimale Abdichtgeometrie beibehält, wodurch der Verschleiß der Kunststoffdichtlippe 11 des Kunststoffdichtkörper 9 minimiert, und der sogenannte "Trompeteneffekt", d.h. ein Abheben des vorderen, druckraumseitigen Bereichs der Kunststoffdichtlippe 11 von der Welle 3 bzw. der Laufhülse 12, verhindert wird.

Dieser unter dem Anlagekegelwinkel α geneigte Dichtkörperanlagebund 14 bewirkt, dass unabhängig vom anliegenden Innendruck die Anlagefläche der Kunststoffdichtlippe 11 nahezu konstant bleibt, so dass gleichermaßen wie der Verschleiß auch die Reibungswärme an der Dichtstelle und damit auch die Reibungsverluste minimiert werden.

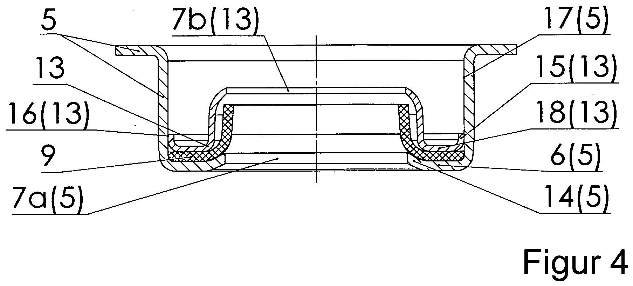

Kennzeichnend ist auch, dass, wie in Figur 4 dargestellt, dichtungsgehäuseseitig am äußeren Rand des Stützkörpers 13 ein Stützkörperfixierbund 15 mit einem Stützkörperfixierzylinder 16 angeordnet ist, wobei der Außendurchmesser des Stützkörperfixierzylinders 16 gegenüber dem Innendurchmesser der zugeordneten Innenwand 17 des Dichtungsgehäuses 5 ein Übermaß aufweist, so dass der Stützkörper 13, wie in Figur 4 dargestellt, im Endmontagezustand mit seinem Stützkörperfixierzylinder 16 im Inneren des Dichtungsgehäuse 5 mit Presssitz so gefügt ist, dass dieser mit seinem an den Stützkörperfixierbund 15 anschließenden Stützkörpersteg 18 den Kunststoffdichtkörper 9 gegen die Rückwand 6 presst, wodurch eine hohe Lagesicherheit des fest im Dichtungsgehäuse 5 fixierten, d.h. eingepressten, Stützkörpers 13 gewährleistet ist.

Dabei bewirkt der Presssitz des Stützkörpers 13 im Dichtungsgehäuse 5 zudem, dass auch der Kunststoffdichtkörper 9 lagesicher gegen die Rückwand 6 des Dichtungsgehäuses 5 verspannt ist, so dass eine dadurch bewirkte Verdrehsicherheit des Kunststoffdichtkörpers 9 eine hohe Zuverlässigkeit dieser Dichtung über die gesamte Einsatzdauer gewährleistet.

Erfindungswesentlich ist weiterhin, dass am Stützkörpersteg 18 des Stützkörpers 13 innen ein Stützkörperpositionierzylinder 21 mit einem Stützkörperpositionierzylinderaußenmantel 22 angeordnet ist, wobei dem Stützkörperpositionierzylinders 21 druckraumseitig benachbart, zwischen dem druckraumseitigen Ende des Stützkörperpositionierzylinders 21 und dem freien, druckraumseitig mit der Wellendurchtrittsbohrung 7b versehenen Ende des Stützkörpers 13, ein sich in Richtung des Druckraumes 1, d.h. zur Wellendurchtrittsbohrung 7b hin, verjüngender Stützbund 19 am Stützkörperpositionierzylinder 21 angeordnet ist, der an seinem freien, druckraumseitigen mit der Wellendurchtrittsbohrung 7b im Stützkörper 13 versehenen Ende einen Stützbundrand 20 aufweist.

Erfindungsgemäß ist aber auch, dass der Elastomerdichtkörper 8 einen Dichtkörperpositionierzylinder 27 aufweist der außenraumseitig mit seiner Stirnseite 28 am Stützkörpersteg 18 anliegt und der radial mit seinem Innenmantel 30 gegenüber dem Stützkörperpositionierzylinderaußenmantel 22 und mit seinem Außenmantel 29 radial gegenüber der Innenwand 17 des Dichtungsgehäuses 5 verspannt ist.

Die während des Dauerbetrieb auftretenden hohen Beanspruchungen des im Dichtungsgehäuse 5 erfindungsgemäß montierten Stützkörpers 13, werden durch dessen erfindungsgemäße Anordnung zuverlässig in das Dichtungsgehäuse 5 übertragen.

Kennzeichnend ist weiterhin, dass am Dichtkörperpositionierzylinder 27 des Elastomerdichtkörpers 8 druckraumseitig ein Klemmpositionierungsring 23 angeordnet ist, der mit einem am Klemmpositionierungsring 23 innen, d.h. wellenseitig angeordneten Positioniersteg 24 in eine druckraumseitig am Elastomerdichtkörper 8 angeordnete ringförmige Freimachung 31 eingereift, welche parallel zum Stützkörperpositionierzylinder 21 verläuft und in den Elastomerdichtkörper 8 bis oberhalb des Stützkörperpositionierzylinder 21 hineinreicht und dabei am Elastomerdichtkörper 8 einen am Stützkörperpositionierzylinder 21 anliegenden Vorspanndichtsteg 26 ausbildet, in dessen Verlängerung druckraumseitig die Elastomerdichtlippe 10 angeordnet ist.

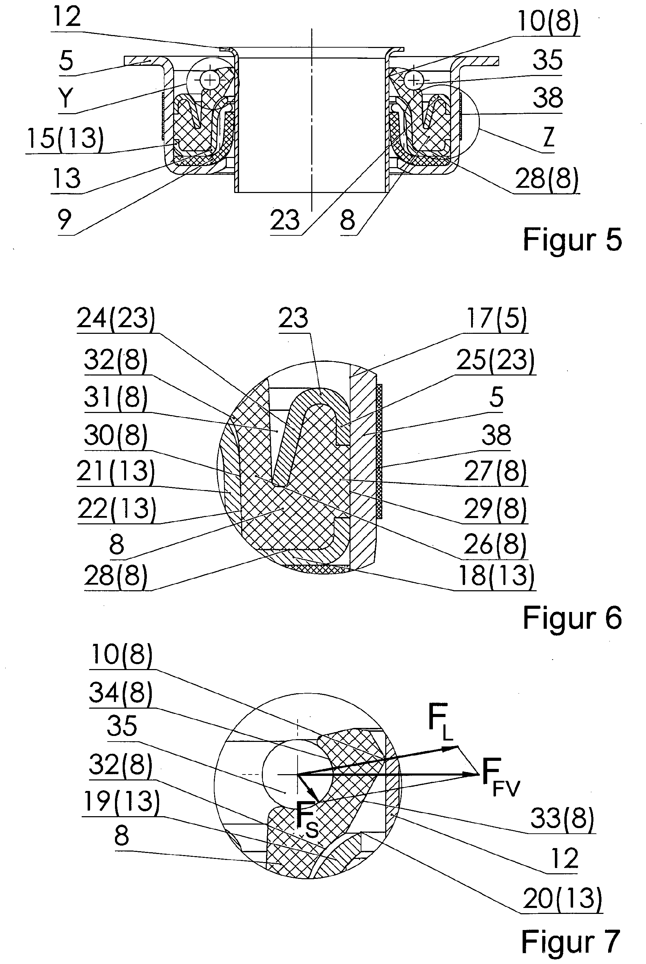

Erfindungswesentlich ist auch, dass an dem in der Figur 6 als Einzelheit Z der Figur 5 im Detail dargestellten Klemmpositionierungsring 23 außen, d.h. dem Positioniersteg 24 gehäuseseitig gegenüberliegend, ein Klemmringfixierzylinder 25 angeordnet ist, dessen Außendurchmesser gegenüber dem Innendurchmesser der zugeordneten Innenwand 17 des Dichtungsgehäuses 5 ein Übermaß aufweist, so dass dieser im Endmontagezustand im Inneren des Dichtungsgehäuse 5 mittels Presssitz gefügt ist.

Die erfindungsgemäße Lösung ermöglicht den Einsatz von kostengünstigen Stanzteilen sowohl für die Stützkörper 13 und die Klemmpositionierungsringe 23, wodurch eine fertigungs- und montagetechnisch einfache wie auch sehr zuverlässige, und gleichzeitig auch sehr kostengünstige Lagesicherung beider Dichtkörper, d.h. des Elastomerdichtkörpers 8 und des Kunststoffdichtkörpers 9, am und im Dichtungsgehäuse 5 gewährleistet ist.

Erfindungsgemäß ist auch, dass der Vorspanndichtsteg 26 des Elastomerdichtkörpers 8 flächig am Stützkörperpositionierzylinderaußenmantel 22 des Stützkörperpositionierzylinders 21 anliegt, wobei am Vorspanndichtsteg 26 ein im Bereich oberhalb des Stützbundes 19 angeordneter, frei tragender Spannbogensteg 32 angeordnet ist, der oberhalb des Stützbundrandes 20 in einen ebenfalls frei tragenden Stützbogensteg 33 übergeht, an dem druckraumseitig dann die Elastomerdichtlippe 10 angeordnet ist, welche an der Welle 3, oder an einer auf der Welle 3 drehfest angeordneten Laufhülse 12 anliegt.

Diese erfindungsgemäße Lösung gewährleistet eine optimale, sehr zuverlässige und zugleich kostengünstige Lagesicherung beider Dichtkörper, d.h. des Elastomerdichtkörpers 8 und des Kunststoffdichtkörpers 9, am und im Dichtungsgehäuse 5 der erfindungsgemäßen Radialwellendichtung.

Im vorliegenden Ausführungsbeispiel liegt die Elastomerdichtlippe 10 an einer auf der Welle 3 drehfest angeordneten Laufhülse 12 an, die aus Edelstahl besteht und eine Oberflächenhärte von größer 1120 HV aufweist.

Im vorliegenden Ausführungsbeispiel beträgt die Oberflächenhärte der Laufhülse 12 1450 HV.

Der Einsatz derartiger Laufhülsen 12 mit hoher Oberflächenhärte bewirkt, dass die Welle 3 wesentlich kostengünstiger hergestellt werden kann, da die Laufhülsen 12 separat gefertigt und auch nur im Bereich der Radialwellendichtung auf die Wellen 3 aufgezogen werden. Dadurch wird eine Korrosion unter den Dichtlippen vermieden, der Verschleiß im Bereich der Dichtlippe, selbst wenn Fremdpartikel unter der Dichtlippe "eingefangen werden", wird minimiert, d.h. eine Riefenbildung auf den Laufflächen wird stark vermindert, wodurch die Laufflächen im realen Einsatz über lange Zeit nahezu verschleißfrei, d.h. für die Dichtwirkung unbeschädigt, bleiben. Erfindungswesentlich ist, dass oberhalb des Stützbogensteges 33 am Außenumfang des Elastomerdichtkörpers 8 eine Außennut 34 angeordnet ist, in der eine Schnurfeder 35 angeordnet ist, die neben dem Stützbogensteg 33 auch gleichzeitig den frei tragenden Spannbogensteg 32 des Elastomerdichtkörpers 8 vorspannt, und dabei die Elastomerdichtlippe 10 federelastisch gegen die Welle 3 bzw. die drehfest auf der Welle 3 angeordnete Laufhülse 12 verspannt.

Diese erfindungsgemäße Anordnung einer Schnurfeder 35 oberhalb des Stützbogensteges 33 am Außenumfang des Elastomerdichtkörpers 8 bewirkt, wie in der Figur 7, als Einzelheit Y der Figur 5, dargestellt, eine optimale Kraftaufteilung der Federvorspannkraft F_{FV} einerseits in die auf den Spannbogensteg 32 des Elastomerdichtkörpers 8 einwirkende Spannkraft F_{S} , welche definiert den frei tragenden Spannbogensteg 32 des Elastomerdichtkörpers 8 elastisch so vorspannt, dass die auf die linienförmige Elastomerdichtlippe 10 definiert einwirkende Lippenanpresskraft F_{L} die Elastomerdichtlippe 10 optimal gegen die Welle 3, oder die drehfest auf der Welle 3 angeordnete Laufhülse 12 presst, wodurch über die gesamte Laufzeit der erfindungsgemäßen Radialwellendichtung eine optimale Schwingungsdämpfung der Elastomerdichtlippe 10 gewährleistet ist, und selbst die Stick-Slip-Neigung (Schwingungsneigung) bei ungünstigen Einsatzbedingungen (wie schlecht schmierende Kühlmittel, hohe Kühlmitteltemperaturen und geringe Drehzahlen, wie z.B. die Leerlaufdrehzahl, sowohl einzeln wie auch in deren Kombination) verhindert wird, und gewährleistet so über die gesamte Laufzeit eine sichere und zuverlässige, hohe Dichtwirkung bei minimalen Reibungsverlusten.

Gleichzeitig bewirkt diese erfindungsgemäße Radialwellendichtung eine optimale Dichtlippenvorspannung, die auch dem Druckverformungsrest (DVR) des Elastomers entgegenwirkt, und die sowohl die Reibung wie auch den Verschleiß minimiert, wobei selbst bei evtl. doch eintretendem Verschleiß ein selbsttätiges optimales elastisches Nachstellen der Kontaktzone durch die Schnurfeder 35 erfolgt, so dass zudem auch die Unterdruckstabilität über die gesamte Lebensdauer der Radialwellendichtung gewährleistet ist, und jegliche Leckagen über/an den Abdichtstellen zwischen der Elastomerdichtlippe 10 und der Laufhülse 12 vermieden werden.

Die erfindungsgemäße Anordnung bewirkt in ihrem Zusammenwirken zudem, dass über die gesamte Laufzeit der erfindungsgemäßen Radialwellendichtung eine optimale Schwingungsdämpfung der Elastomerdichtlippe 10 bei optimaler Dichtlippenvorspannung mit minimalem Reibungsverlusten gewährleistet werden kann, wodurch die Reibung und der Verschleiß minimiert, und auch die Unterdruckstabilität über die gesamte Lebensdauer der Radialwellendichtung gewährleistet und Leckagen über/an den Abdichtstellen zwischen der Elastomerdichtlippe 10 und der Laufhülse 12 vermieden werden.

Ein weiteres Merkmal der Erfindung besteht darin, dass zwischen dem Stützkörper 13, dem Kunststoffdichtkörper 9 und der Welle 3 bzw. der Laufhülse 12 eine Schmierkammer 36 angeordnet ist, in der ein Schmiermedium 37, im vorliegenden Ausführungsbeispiel ein PTFE-Fett angeordnet ist.

Dadurch wird bewirkt, dass ein Ankleben der Dichtlippe während des Transportes zum Endkunden vermieden und die Dichtlippe bei der ersten Inbetriebnahme nicht losgerissen wird, gleichzeitig wird das Einlaufverhalten der Dichtlippen verbessert, die Dichtlippe auch bei Trockentests geschmiert, die Reibtemperatur bei ungünstigen Einsatzbedingungen reduziert und selbst die Stick-Slip-Neigung (Geräusche und Quietschen durch Schwingungsneigung) bei ungünstigen Einsatzbedingungen (wie schlecht schmierende Kühlmittel, hohe Kühlmitteltemperaturen und geringe Drehzahlen, z.B. Leerlaufdrehzahl, in Kombination) verhindert wird.

Am Außenumfang des Dichtungsgehäuses 5 ist, wie in der Figur 3 dargestellt, umlaufend Dichtlack 38 angeordnet.

Dieser Dichtlack 38 bewirkt, dass Unebenheiten in der Gehäusebohrung ausgeglichen, und die statische Dichtheit zwischen dem Arbeitsgehäuse 2 und dem Dichtungsgehäuse 5 über die gesamte Laufzeit der Radialwellendichtung gewährleistet ist.

Mittels dieser oben vorgestellten erfindungsgemäßen Radialwellendichtung kann erstmals den gestiegenen Anforderungen des Automotivebereichs, insbesondere für verbrauchsoptimierten Verbrennungsmotore und E-Fahrzeuge, mit einem immer geringeren Platzbedarf, mit immer geringer werdenden Leistungsverlusten, einer immer längeren Lebensdauer bei einem gleichzeitig sinkenden Gewicht, Rechnung getragen werden.

Da diese kleineren Radialwellendichtungen für Wellen mit einem Durchmesser von 9 mm bis hinunter zu 3 mm im jeweiligen Gesamtkonzept die Anforderung nach weniger Gewicht, wesentlich geringeren Reibungs- und damit einhergehende Leistungsverlusten, wie auch nach einen deutlich geringeren Verschleiß der mit dem kleineren Wellendurchmesser, auf Grund der sinkenden Umfangsgeschwindigkeiten, ebenfalls deutlich sinkt, erfüllt werden können.

Selbstverständlich kann die erfindungsgemäße Bauform auch für Radialwellendichtungen mit Wellendurchmessern von über 9 mm eingesetzt werden, und dort zur Abdichtung von Öl oder Kühlmitteln dienen, und auch bei den größeren Bauformen die Leckageverluste senken, dabei axiale Wellenbewegungen sehr gut ausgleichen, gleichzeitig die Zuverlässigkeit wie auch die Lebensdauer deutlich erhöhen, zudem Stillstandsleckagen zuverlässig vermeiden, und selbst nach längerer Einsatzzeit noch eine "luftfreie" Vakuumbefüllung von Kühlmittelpumpen noch gewährleisten, wobei auch diese "größere" Radialwellendichtung fertigungstechnisch sehr einfach herstell- und montierbar ist, so dass neben den Fertigungskosten auch die Montagekosten in der Endfertigung gegenüber den gegenwärtigen Lösungen des Standes der Technik deutlich reduziert werden.

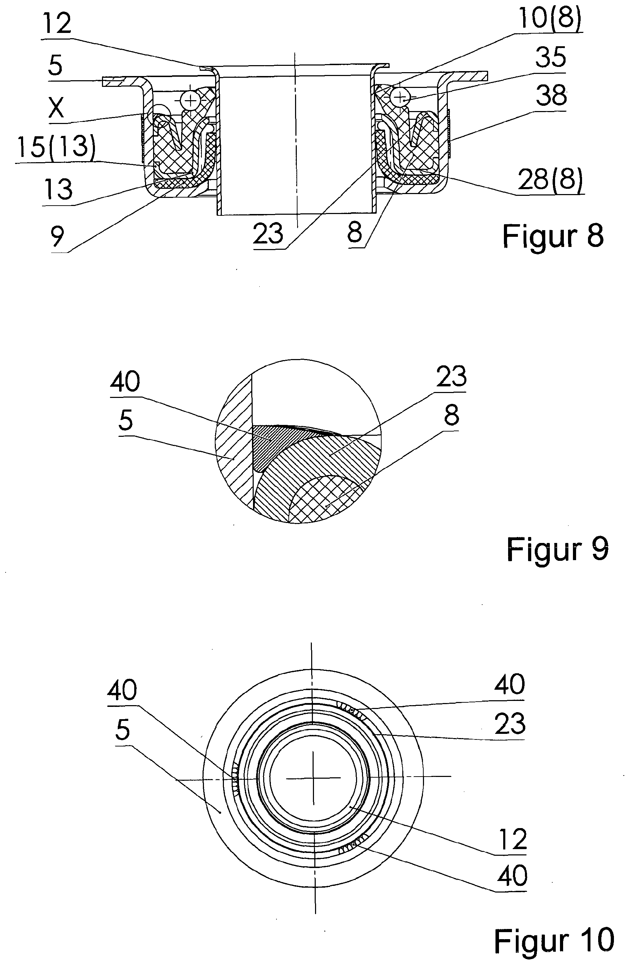

Die Figuren 8, 9 und 10 zeigen eine analog zu der in den Figuren 5, 6 und 7 dargestellten Bauform aufgebaute erfindungsgemäße Radialwellendichtung, jedoch in einer laserverschweißten Ausführungsform im Endmontagezustand/ Auslieferungszustand, d.h. vor dem Einbau in ein Arbeitsgehäuse 2 einer Kühlmittelpumpe, in der Seitenansicht im Schnitt, die dadurch gekennzeichnet ist, dass der Klemmringfixierzylinder 25 des Klemmpositionierungsrings 23 in dem mittels Presssitz gefügten Zustand, zudem mittels einer/mehrerer im Randbereich gleichmäßig über den Umfang verteilter, zwischen dem Dichtungsgehäuse 5 und dem Klemmpositionierungsring 23 angeordnete/n Schweißnaht/-nähte 40, neben dem Presssitz somit nicht nur kraftschlüssig sondern zudem noch stoffschlüssig mit dem Dichtungsgehäuse 5 verbunden ist.

Dadurch ist eine hohe Lagesicherheit des fest im Dichtungsgehäuse 5 fixierten, d.h. eingepressten/verspannten, und in diesem verspannten Zustand nachfolgend zudem noch verschweißten, Klemmringfixierzylinder 25 des Klemmpositionierungsrings 23 gewährleistet.

Wesentlich ist in diesem Zusammenhang auch, dass die zwischen dem Klemmpositionierungsring 23 und dem Dichtungsgehäuse 5 angeordnete/n Schweißnaht/-nähte 40 vorzugsweise als Laserschweißnaht/-nähte ausgeführt ist/sind.

Durch diese zusätzliche stoffschlüssige Verbindung mittels Laserschweißverbindung wird die Zuverlässigkeit des Verbundes noch um ein Vielfaches erhöht, da die Laser- Schweißnähte sehr hohe Zug-, Druck-, Verdreh- und Biegebeanspruchungen aufnehmen können.

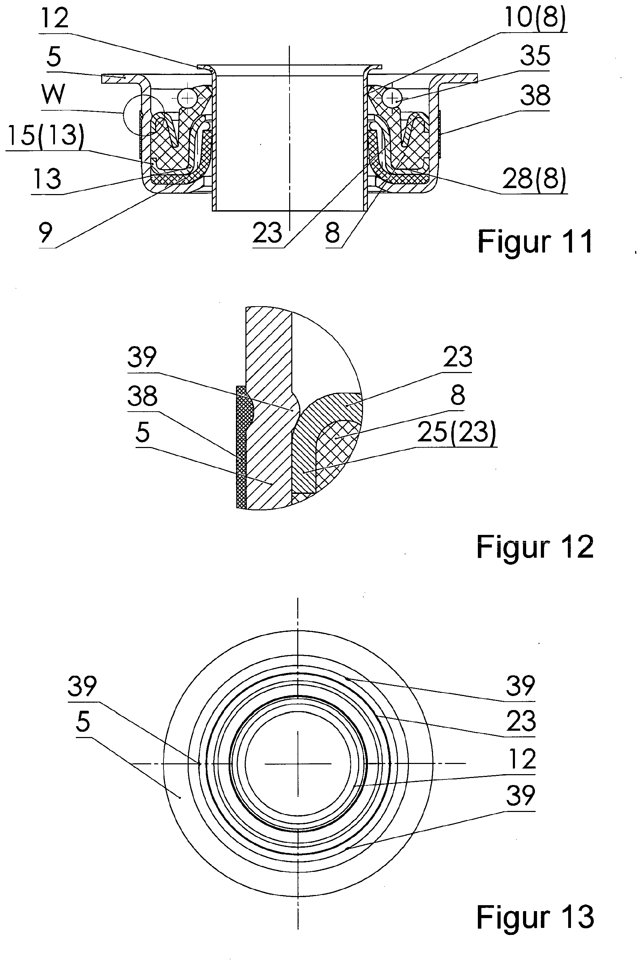

Die Figuren 11, 12 und 13 zeigen ebenfalls eine analog zu der in den Figuren 5, 6 und 7 dargestellten Bauform aufgebaute erfindungsgemäße Radialwellendichtung jedoch hier mit am Umfang des Dichtungsgehäuse 5 angeordneten Fixierkegel in Form von Positionierkerben 39, im Endmontagezustand/ Auslieferungszustand, d.h. vor dem Einbau in ein Arbeitsgehäuse 2 einer Kühlmittelpumpe, in der Seitenansicht im Schnitt. Vorteilhaft ist dabei, dass zur Lagesicherung des Klemmringfixierzylinders 25 des Klemmpositionierungsrings 23 im Dichtungsgehäuse 5, am Umfang des Dichtungsgehäuses 5, Fixierkegel angeordnet sind, die beispielsweise von Positionierkerben 39 ausgebildet werden, und die neben dem Presssitz formschlüssig eine zusätzliche Verdrehsicherheit des Klemmpositionierungsrings 23 im Dichtungsgehäuse 5 (analog zur Laserschweißverbindung) gewährleisten.

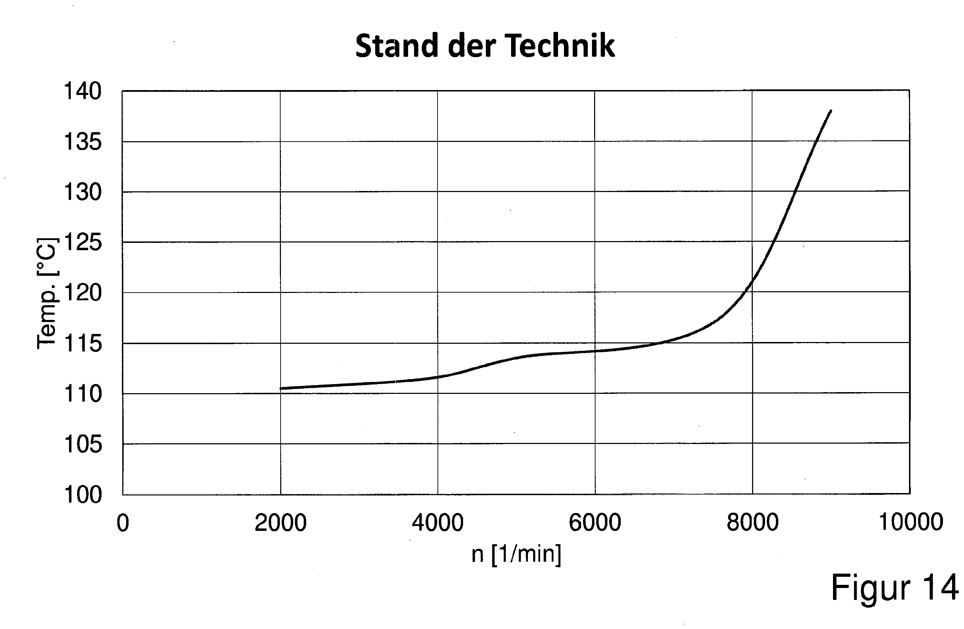

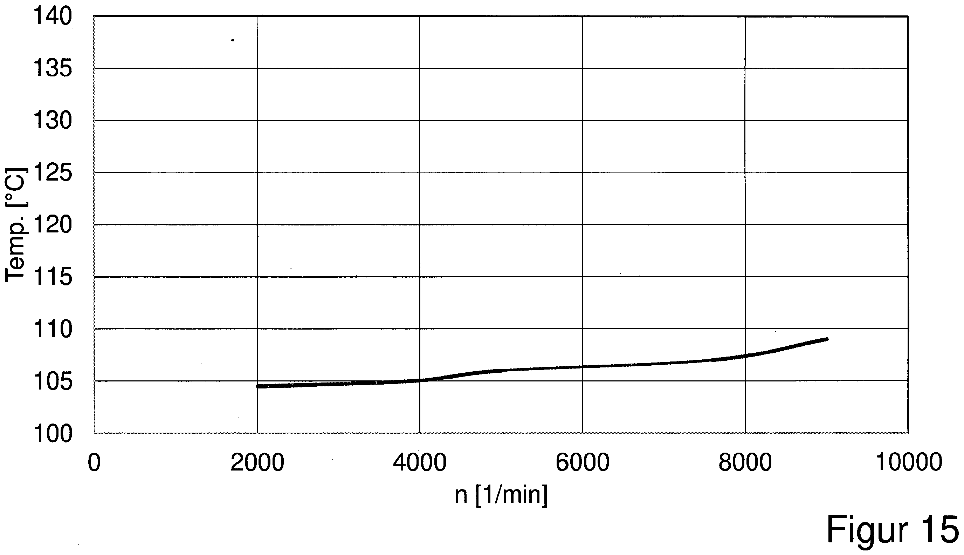

In den Figuren 14 und 15 sind die Messergebnisse eines Versuchsaufbaus grafisch dargestellt, bei denen unter den gleichen Versuchsbedingungen mit der Radialwellendichtung nach der EP 2817539 B1 der in der Figur 14, und mit der erfindungsgemäßen Radialwellendichtung der in Figur 15 dargestellte Temperaturverlauf über die Drehzahl ermittelt wurde.

Beide Male wurde das selbe Kühlmittel eingesetzt.

Die Temperaturmessung erfolgte dabei (von hinten) direkt an der Elastomerdichtlippe bei einem Druck von 2,5 bar im Druckraum, dem Kühlmittelraum, und bei einer Kühlmitteltemperatur von 107 °C, stets nach jeweils 3 Minuten Dauerlauf, mit der angegebenen Drehzahl.

Die Figur 14, welche den Temperaturverlauf über die Drehzahl bei Einsatz der Radialwellendichtung nach der EP 2817539 B1 zeigt, zeigt dass am wasserseitig angeordneten Elastomerdichtkörper 8, ab Drehzahlen von über ca. 7.000 U/min bereits ein deutlicher Temperaturanstieg an der Dichtung eintritt.

Es wird davon ausgegangen, dass dies darauf zurückzuführen ist, dass bei der in der EP 2817539 B1 eingesetzten Elastomerdichtlippe bei höheren Drehzahlen, d.h. bei Drehzahlen im Bereich von 7.000 U/min, der Flüssigkeitsfilm zwischen der Welle bzw. der Laufhülse und der Elastomerdichtlippe abreißt, und dies dann mit zunehmender Drehzahl zu einen mit der Erhöhung der Drehzahl deutlich zunehmenden Temperaturanstieg an der Elastomerdichtlippe führt.

Die Figur 15 zeigt den mit dem selben Versuchsaufbau ermittelten Temperaturverlauf über die Drehzahl, jedoch nun bei Einsatz der erfindungsgemäßen Radialwellendichtung.

Die Gegenüberstellung beider Diagramme belegt sehr eindeutig, dass mit der erfindungsgemäßen Radialwellendichung, insbesondere bei höheren Drehzahlen, die Verlustleistungen, d.h. die Reibungsverluste, gegenüber dem gegenwärtigen Stand der Technik sehr deutlich gesenkt und damit gleichzeitig die Zuverlässigkeit wie auch die Lebensdauer der erfindungsgemäßen Radialwellendichtung wesentlich erhöht werden konnte.

Mittels der erfindungsgemäßen Lösung ist es somit gelungen eine neuartige Radialwellendichtung zur Abdichtung einer aus einem mit einem fluiden Medium gefüllten Raum herausgeführten rotierenden Welle gegenüber der Atmosphäre zu entwickeln, welche sowohl zur Abdichtung von Öl- oder ölähnlichen Medien, aber auch für Kühlmittelpumpen, unter Einsatz von dünnflüssigen, wasserbasierenden Kühlmitteln mit leicht schmierenden Zusätzen, die Nachteile des Standes der Technik beseitigt, und auch die in Verbindung mit kleinen Wellendurchmessern, d.h. Wellendurchmessern von 9 mm bis 3 mm die Leistungs- und Leckageverluste deutlich senkt, dabei zudem axiale Wellenbewegungen sehr gut ausgleicht, gleichzeitig die Zuverlässigkeit wie auch die Lebensdauer deutlich erhöht, zudem Stillstandsleckagen zuverlässig vermeidet, und selbst nach längerer Einsatzzeit noch eine "luftfreie" Vakuumbefüllung von Kühlmittelpumpen auch mit kleinen Wellendurchmessern im Bereich von 9 mm bis 3 mm gewährleistet, wobei die oben vorgestellte neuartige Radialwellendichtung zudem auch noch fertigungstechnisch sehr einfach herstell- und montierbar ist, so dass neben den Fertigungskosten auch die Montagekosten in der Endfertigung gegenüber den gegenwärtigen Lösungen des Standes der Technik deutlich reduziert werden.

### Bezugszeichenzusammenstellung

- 1: Druckraum
- 2: Arbeitsgehäuse
- 3: Welle
- 4: Außenraum
- 5: Dichtungsgehäuse
- 6: Rückwand
- 7a: Wellendurchtrittsbohrung in der Rückwand 6
- 7b: Wellendurchtrittsbohrung im Stützkörper 13
- 8: Elastomerdichtkörper
- 9: Kunststoffdichtkörper
- 10: Elastomerdichtlippe
- 11: Kunststoffdichtlippe
- 12: Laufhülse
- 13: Stützkörper
- 14: Dichtkörperanlagebund
- 15: Stützkörperfixierbund
- 16: Stützkörperfixierzylinder
- 17: Innenwand
- 18: Stützkörpersteg
- 19: Stützbund
- 20: Stützbundrand
- 21: Stützkörperpositionierzylinder
- 22: Stützkörperpositionierzylinderaußenmantel
- 23: Klemmpositionierungsring
- 24: Positioniersteg
- 25: Klemmringfixierzylinder
- 26: Vorspanndichtsteg
- 27: Dichtkörperpositionierzylinder
- 28: Stirnseite
- 29: Außenmantel
- 30: Innenmantel
- 31: Freimachung
- 32: Spannbogensteg
- 33: Stützbogensteg
- 34: Außennut
- 35: Schnurfeder
- 36: Schmierkammer
- 37: Schmiermedium
- 38: Dichtlack
- 39: Positionierkerbe
- 40: Schweißnaht/-nähte
- 41: Hülse
- 42: Gleitlager
- 43: Gleitlagerrückwand

- F_{FV}: Federvorspannkraft
- F_{S}: Spannkraft
- F_{L}: Lippenanpresskraft

- α: Anlagekegelwinkel

## Patentansprüche

1. Radialwellendichtung zur Abdichtung, einer aus einem mit einem fluiden Medium gefüllten Druckraum (1) eines Arbeitsgehäuses (2) herausgeführten rotierenden Welle (3) gegenüber einem Außenraum (4), der Atmosphäre, mit einem im Arbeitsgehäuse (2) angeordneten Dichtungsgehäuse (5) mit einer Rückwand (6) und einer in dieser Rückwand (6) angeordneten Wellendurchtrittsbohrung (7a), wobei im Dichtungsgehäuse (5) mindestens ein Elastomerdichtkörper (8) mit einer druckraumseitig angeordneten Elastomerdichtlippe (10) derart angeordnet ist, dass diese Elastomerdichtlippe (10) direkt an der Welle (3) oder einer auf der Welle (3) drehfest angeordneten Laufhülse (12) anliegt/anliegen, wobei der Elastomerdichtkörper (8) in seiner Lage gegenüber dem Dichtungsgehäuse (5) mittels zweier Positionierkörper, eines ersten Positionierkörpers, eines mit einer ringförmigen Wellendurchtrittsbohrung (7b) versehenen metallischen Stützkörpers (13), und eines zweiten Positionierkörpers, eines Klemmpositionierungsrings (23), exakt lagepositioniert ist, wobei
- dichtungsgehäuseseitig am äußeren Rand des Stützkörpers (13) ein Stützkörperfixierbund (15) mit einem Stützkörperfixierzylinder (16) angeordnet ist, und
- der Stützkörper (13) mit einem sich radial an den Stützkörperfixierbund (15) anschließenden Stützkörpersteg (18) versehen ist, und am Stützkörpersteg (18) des Stützkörpers (13) innen ein Stützkörperpositionierzylinder (21) mit einem Stützkörperpositionierzylinderaußenmantel (22) angeordnet ist, und
- dem Stützkörperpositionierzylinder (21) druckraumseitig benachbart, zwischen dem druckraumseitigen Ende des Stützkörperpositionierzylinders (21) und dem freien, druckraumseitig mit einer Wellendurchtrittsbohrung (7b) versehenen Ende des Stützkörpers (13), ein sich in Richtung des Druckraumes (1), d.h. zur Wellendurchtrittsbohrung (7b) hin, verjüngender Stützbund (19) am Stützkörperpositionierzylinders (21) angeordnet ist, der an seinem freien, druckraumseitigen mit der Wellendurchtrittsbohrung (7b) im Stützkörper (13) versehenen Ende einen Stützbundrand (20) aufweist, und
- der Elastomerdichtkörper (8) einen Dichtkörperpositionierzylinder (27) aufweist der außenraumseitig mit seiner Stirnseite (28) am Stützkörpersteg (18) anliegt und der radial mit seinem Innenmantel (30) gegenüber dem Stützkörperpositionierzylinderaußenmantel (22) und mit seinem Außenmantel (29) radial gegenüber der Innenwand (17) des Dichtungsgehäuses (5) verspannt ist, und
- am Dichtkörperpositionierzylinder (27) des Elastomerdichtkörpers (8) druckraumseitig der Klemmpositionierungsring (23) angeordnet ist, der mit einem am Klemmpositionierungsring (23) innen, d.h. wellenseitig angeordneten Positioniersteg (24) in eine druckraumseitig am Dichtkörperpositionierzylinder (27) des Elastomerdichtkörpers (8) angeordnete ringförmige Freimachung (31) eingreift, welche parallel zum Stützkörperpositionierzylinder (21) verläuft und in den Elastomerdichtkörper (8) bis oberhalb des Stützkörperpositionierzylinders (21) hineinreicht und dabei am Elastomerdichtkörper (8) einen am Stützkörperpositionierzylinder (21) anliegenden Vorspanndichtsteg (26) ausbildet an dem druckraumseitig die Elastomerdichtlippe (10) angeordnet ist, und
- am Klemmpositionierungsring (23) außen, d.h. dem Positioniersteg (24) gehäuseseitig gegenüberliegend, ein Klemmringfixierzylinder (25) angeordnet ist, dessen Außendurchmesser gegenüber dem Innendurchmesser der zugeordneten Innenwand (17) des Dichtungsgehäuses (5) ein Übermaß aufweist, so dass auch dieser im Endmontagezustand im Inneren des Dichtungsgehäuses (5) mittels Presssitz gefügt ist, und
- der Vorspanndichtsteg (26) des Elastomerdichtkörpers (8) am Stützkörperpositionierzylinderaußenmantel (22) des Stützkörperpositionierzylinders (21) anliegt, und
- am Vorspanndichtsteg (26) ein im Bereich oberhalb des Stützbundes (19) angeordneter, frei tragender Spannbogensteg (32) angeordnet ist, der oberhalb des Stützbundrandes (20) in einen ebenfalls frei tragenden Stützbogensteg (33) übergeht, an dem druckraumseitig dann die Elastomerdichtlippe (10) angeordnet ist, welche an der Welle (3) oder an einer auf der Welle (3) drehfest angeordneten Laufhülse (12) anliegt, und
- der Außendurchmesser des Stützkörperfixierzylinders (16) gegenüber dem Innendurchmesser der zugeordneten Innenwand (17) des Dichtungsgehäuses (5) ein Übermaß aufweist, so dass der Stützkörper (13), welcher im Endmontagezustand mit seinem Stützkörperfixierzylinder (16) im Inneren des Dichtungsgehäuses (5) mit Presssitz kraftschlüssig gefügt ist, und
- oberhalb des Stützbogensteges (33) am Außenumfang des Elastomerdichtkörpers (8) eine Außennut (34) angeordnet ist, in der eine Schnurfeder (35) angeordnet ist, die neben dem Stützbogensteg (33) auch gleichzeitig den frei tragenden Spannbogensteg (32) des Elastomerdichtkörpers (8) vorspannt, und dabei die Elastomerdichtlippe (10) federelastisch gegen die Welle (3) bzw. die drehfest auf der Welle (3) angeordnete Laufhülse (12) verspannt.

2. Radialwellendichtung nach Anspruch 1, **dadurch gekennzeichnet, dass** im Arbeitsgehäuse (2) eine Wellendurchtrittsbohrung (7a) angeordnet ist, zu der rotationssymmetrisch eine zylindrische Senkbohrung angeordnet ist, die das Dichtungsgehäuse (5) mit seiner Rückwand (6) mit der in dieser Rückwand (6) angeordneten Wellendurchtrittsbohrung (7a) direkt ausbildet.

3. Radialwellendichtung nach Anspruch 1, **dadurch gekennzeichnet, dass** das Dichtungsgehäuse (5) mit seiner Rückwand (6) und einer in dieser Rückwand (6) angeordneten Wellendurchtrittsbohrung (7a) von einer Hülse (41) aus Metall oder einem zylindrischen Metallformteil ausgebildet wird, welche/welches flüssigkeitsdicht in einer Bohrung des Arbeitsgehäuses (2) als separates Bauteil angeordnet ist.

4. Radialwellendichtung nach Anspruch 3, **dadurch gekennzeichnet, dass** in dem im Arbeitsgehäuse (2) angeordneten metallischen Dichtungsgehäuse (5), welches als Hülse (41) ausgebildet ist, die Radialwellendichtung angeordnet ist, welcher druckraumseitig ein Gleitlager (42) derart benachbart angeordnet ist, dass dieses axial am Klemmpositionierungsring (23) anliegt, wobei an diesem Gleitlager (42) druckraumseitig eine Gleitlagerrückwand (43) angeordnet ist, an der axial der Stützkörper (13) einer weiteren in der Hülse (41) angeordneten Radialwellendichtung nach Anspruch 1 anliegt.

5. Radialwellendichtung nach Anspruch 3, **dadurch gekennzeichnet, dass** das im Arbeitsgehäuse (2) angeordnete, als zylindrisches Metallformteil ausgebildete metallische Dichtungsgehäuse (5) mit einer Rückwand (6) und einer in dieser Rückwand (6) angeordneten Wellendurchtrittsbohrung (7a) versehen ist, wobei im Bereich der Wellendurchtrittsbohrung (7a) an der Rückwand (6), ein kegelstumpfförmig in Richtung des Druckraumes (1), unter einem Anlagekegelwinkel (α), der im Bereich von 25° bis 38° geneigter Dichtkörperanlagebund (14) angeordnet ist, und im Dichtungsgehäuse (5) druckraumseitig der Elastomerdichtkörper (8) mit seiner Elastomerdichtlippe (10) und außenraumseitig ein Kunststoffdichtkörper (9) mit PTFE und einer Kunststoffdichtlippe (11) derart angeordnet sind, dass diese Dichtlippen, die Elastomerdichtlippe (10) wie auch die Kunststoffdichtlippe (11), direkt an der Welle (3) oder einer auf der Welle (3) drehfest angeordneten Laufhülse (12) anliegt/anliegen, wobei die beiden Dichtkörper, der Elastomerdichtkörper (8) und der Kunststoffdichtkörper (9), in ihrer Lage gegenüber dem Dichtungsgehäuse (5) mittels eines mit einer ringförmigen Wellendurchtrittsbohrung (7b) versehenen metallischen Stützkörpers (13) exakt so lagepositioniert sind, dass der Stützkörper (13), welcher im Endmontagezustand mit seinem Stützkörperfixierzylinder (16) im Inneren des Dichtungsgehäuses (5) mit Presssitz gefügt ist, mit seinem sich an den Stützkörperfixierbund (15) anschließenden Stützkörpersteg (18) den Kunststoffdichtkörper (9) gegen die Rückwand (6) presst, und dass zwischen dem Stützkörper (13), dem Kunststoffdichtkörper (9) und der Welle (3), bzw. der Laufhülse (12) eine Schmierkammer (36) angeordnet ist, in der ein Schmiermedium (37) angeordnet ist.

6. Radialwellendichtung nach einem der Ansprüche 1 bis 5, **dadurch gekennzeichnet, dass** der Klemmringfixierzylinder (25) des Klemmpositionierungsrings (23) in dem mittels Presssitz gefügten Zustand, zudem mittels einer/mehrerer im Randbereich, zwischen dem Dichtungsgehäuse (5) und dem Klemmpositionierungsring (23) angeordnete/n Schweißnaht/-nähte (40), auch noch stoffschlüssig mit dem Dichtungsgehäuse (5) verbunden ist.

7. Radialwellendichtung nach Anspruch 6, **dadurch gekennzeichnet, dass** die zwischen dem Klemmpositionierungsring (23) und dem Dichtungsgehäuse (5) angeordnete/n Schweißnaht/-nähte (40) als Laserschweißnaht/-nähte ausgeführt ist/sind.

8. Radialwellendichtung nach einem der Ansprüche 1 bis 5, **dadurch gekennzeichnet, dass** zur formschlüssigen Lagesicherung des Klemmringfixierzylinder (25) des Klemmpositionierungsrings (23) im Dichtungsgehäuse (5), am Umfang des Dichtungsgehäuse (5), Fixierkegel angeordnet sind, die beispielsweise von Positionierkerben (39) ausgebildet werden.

9. Radialwellendichtung nach Anspruch 5, **dadurch gekennzeichnet, dass** in der Schmierkammer (36) als Schmiermedium (37) ein PTFE-Fett angeordnet ist.

10. Radialwellendichtung nach einem der Ansprüche 1 bis 9 mit einer auf der Welle (3) drehfest angeordneter Laufhülse (12), **dadurch gekennzeichnet, dass** die Laufhülse (12) aus Edelstahl besteht und eine Oberflächenhärte größer 1120 HV aufweist.

11. Radialwellendichtung nach Anspruch 3, **dadurch gekennzeichnet, dass** am Außenmantel des jeweiligen Dichtungsgehäuses (5), zum Arbeitsgehäuse (2) hin, umlaufend Dichtlack (38) angeordnet ist.

## Claims

1. Radial shaft seal for sealing the atmosphere for a rotating shaft (3) led out of a pressure chamber (1) of a working housing (2) filled with a fluid medium, relative to an outside space (4), with a seal housing (5) arranged in the working housing (2), with a rear wall (6) and a shaft penetration bore (7a) arranged in this rear wall (6), wherein at least one elastomeric sealing member (8) with an elastomeric sealing lip (10) is arranged in seal housing (5) on the pressure chamber side in such a way, that this elastomeric sealing lip (10) is arranged directly against the shaft (3) or up against a running sleeve (12) secured torque-proof to the shaft (3), wherein the elastomeric sealing member (8) is situated precisely for its position relative to the seal housing (5), by means of two positioning bodies, a first positioning body as a metal bracing member (13) furnished with a ring-shaped shaft penetration bore (7b) and a second positioning body, a clamp positioning ring (23), whereby
- a bracing member fixing flange (15) with a bracing member fixing cylinder (16) is arranged on the outer rim of the bracing member (13), on the seal housing side, and
- the bracing member (13) is furnished with a bracing member web (18) attached radially to the bracing member fixing flange (15), and that a bracing member positioning cylinder (21) with a bracing member positioning-cylinder outer jacket (22) is arranged internally on the bracing member web (18) of the bracing member (13), and
- a bracing flange (19) tapered in the direction of pressure chamber (1), i.e. towards the shaft penetration bore (7b) in the bracing member (13), is arranged on the bracing member positioning cylinder (21), on the pressure chamber side alongside the bracing member positioning cylinder (21), between the pressure chamber side end of the bracing member positioning cylinder (21) and the free end of the bracing member (13), furnished on the pressure chamber side with a shaft penetration bore (7b) in bracing member (13), which at its free, pressure chamber side end with the shaft penetration bore (7b) in the bracing member (13) has a bracing-flange rim (20), and
- the elastomeric sealing member (8) has a sealing-member positioning cylinder (27), which on its outside space side is located with its end face (28) against the bracing member web (18) and which is stressed radially with its inner jacket (30) relative to the bracing member positioning-cylinder outer jacket (22) and is stressed radially with its outer jacket (29) relative to the inner wall (17) of the seal housing (5), and
- the clamp positioning ring (23) is arranged on the sealing-member positioning cylinder (27) of the elastomeric sealing member (8) on the pressure chamber side, which has a clamp positioning ring (23) which meshes with a ring-shaped cut-out (31) arranged on the pressure chamber side of the sealing-member positioning cylinder (27) of the elastomeric sealing member (8), with a positioning web (24) arranged internally i.e. on the shaft side, which runs parallel to the bracing member positioning cylinder (21) and which reaches into the elastomeric sealing member (8) until above the bracing member positioning cylinder (21) and in this way forms a prestressing sealing web (26) on the elastomeric sealing member (8) which is in contact with the bracing member positioning cylinder (21), and the elastomeric sealing lip (10) is arranged on the pressure chamber side of the prestressing sealing web (26), and
- a clamp ring fixing cylinder (25) is arranged externally on the clamp positioning ring (23), i.e. situated on the housing side opposite the positioning web (24), whose external diameter displays an excess relative to the internal diameter of the corresponding inner wall (17) of the seal housing (5), so that in its final assembled condition this too is joined in the inside of the seal housing (5) by means of force fit, and
- the prestressing sealing web (26) of the elastomeric sealing member (8) connects with the bracing member positioning-cylinder outer jacket (22) of the bracing member positioning cylinder (21), and
- a free standing stressing arch web (32) is arranged on the prestressing sealing web (26) in the region above the bracing flange (19), which transitions into a likewise free standing bracing arch web (33) above the bracing flange rim (20), on which the elastomeric sealing lip (10) is then arranged on the pressure chamber side, which connects to the shaft (3) or to a running sleeve (12) arranged torque-proof on the shaft (3), and
- the external diameter of the bracing member fixing cylinder (16) displays an excess relative to the internal diameter of the corresponding inner wall (17) of the seal housing (5), so that the bracing member (13) is joined with its bracing member fixing cylinder (16) in its final assembled condition inside the seal housing (5) friction locked by means of force fit, and
- above the bracing arch web (33) an external groove (34) is arranged on the outer circumference of the elastomeric sealing member (8), in which a cord spring (35) is arranged which in addition to the bracing arch web (33) also simultaneously prestresses the free standing stressing arch web (32) of the elastomeric bracing member (8), and in this way tensions the elastomeric sealing lip (10) in an elastic springing manner against the shaft (3) or against the running sleeve (12) which is arranged torque-proof on the shaft (3).

2. Radial shaft seal according to Claim 1, **characterised in, that** a shaft penetration bore (7a) is arranged in the working housing (2), in which a cylindrical counterbore is arranged rotation symmetrically, which the seal housing (5) forms directly with its rear wall (6) with the shaft penetration bore (7a) arranged in this rear wall (6).

3. Radial shaft seal according to Claim 1, **characterised in, that** the seal housing (5) with its rear wall (6) and a shaft penetration bore (7a) arranged in this rear wall (6) is formed out of a metal sleeve (41) or a cylindrical metal preformed part, which is impermeable to fluid arranged in a drilled hole in the working housing (2) as a separate component.

4. Radial shaft seal according to Claim 3, **characterised in, that** the radial shaft seal is arranged in the metallic seal housing (5) arranged in the working housing (2), which is formed as a sleeve (41), which on the pressure chamber side has a slide bearing (42) arranged adjacent to it in such a manner, that this connects axially to the clamp positioning ring (23), wherein a slide bearing rear wall (43) is arranged on the pressure chamber side in this slide bearing (42), to which the bracing member (13) of a further radial shaft seal arranged in the sleeve (41) according to Claim 1 connects axially.

5. Radial shaft seal according to Claim 3, **characterised in, that** the metallic seal housing (5) is formed as a cylindrical metal fitting arranged in the working housing (2) and has a rear wall (6), and is furnished with a shaft penetration bore (7a) arranged in this rear wall (6), wherein a sealing-member contact flange (14) is arranged in the region of the shaft penetration bore (7a) in the rear wall (6), frustoconically inclined in the direction of the pressure chamber (1), at contact taper angle (α), in the range between 25° to 38°, and the elastomeric sealing member (8) with its elastomeric sealing lip (10) is arranged in the seal housing (5) on the pressure chamber side and on the outside space side a plastic sealing member (9) of PTFE and a plastic sealing lip (11) are arranged in such a way, that these sealing lips, the elastomeric sealing lip (10) as well as the plastic sealing lip (11) too, abut directly against the shaft (3) or against a running sleeve (12) arranged directly on the shaft (3) in a torque-proof manner, wherein the two sealing members, the elastomeric sealing member (8) and the plastic sealing member (9), are situated precisely for their position relative to the seal housing (5) by means of a metal bracing member (13) furnished with a ring-shaped shaft penetration bore (7b), so that the bracing member (13), which in its final assembled condition is tightly connected with force fit with its bracing member fixing cylinder (16) in the inside of the seal housing (5), which presses the plastic sealing member (9) against the rear wall (6) with its bracing member web (18) which connects to the bracing member fixing flange (15), and that a lubricating chamber (36) is arranged between the bracing member (13), the plastic sealing member (9) and the shaft (3), or the running sleeve (12), which contains a lubricating medium (37).

6. Radial shaft seal according to one of the Claims 1 to 5, **characterised in, that** the clamp ring fixing cylinder (25) of the clamp positioning ring (23) in the connected state by means of force-fit, in addition is also even connected by means of one /more weld seam/seams (40) arranged in the edge region between the seal housing (5) and the clamp positioning ring (23) not just friction-locked, but also by material to material bond to the seal housing (5).

7. Radial shaft seal according to Claim 6, **characterised in, that** the weld seam/seams (40) arranged between the clamp positioning ring (23) and the seal housing (5) is/are implemented as (a) laser-weld seam(s).

8. Radial shaft seal according to one of the Claims 1 to 5, **characterised in, that** for form-fitted positional security of the clamp ring fixing cylinder (25) of the clamp positioning ring (23) in the seal housing (5), fixing bolts are arranged on the circumference of the seal housing (5), which may for example be made out of positioning notches (39).

9. Radial shaft seal according to Claim 5, **characterised in, that** a PTFE-grease is installed in the lubricating chamber (36) as the lubricating medium (37).

10. Radial shaft seal according to one of the Claims 1 to 9, with a running sleeve (12) fitted torque-proof to the shaft (3), **characterised in, that** the running sleeve (12) is made out of stainless stell and has a surface hardness greater than 1120 HV.

11. Radial shaft seal according to Claim 3, **characterised in, that** sealing lacquer (38) has been applied circumferentially to the outer jacket of the corresponding seal housing (5), facing towards the working housing (2).

## Revendications

1. Joint d'arbre radial destiné à l'étanchéité d'un arbre (3) rotatif dépassant d'un espace de pression (1) d'un carter de travail (2) rempli d'un matériau fluide situé vis-à-vis d'un espace extérieur (4), l'atmosphère, avec un carter d'étanchéité (5) disposé dans le carter de travail (2) avec une paroi arrière (6) et un perçage de passage d'arbre (7a) disposé dans cette paroi arrière (6), au moins un corps d'étanchéité en élastomère (8) avec une lèvre d'étanchéité en élastomère (10) placée du côté de l'espace de pression étant disposé dans le carter d'étanchéité (5) de telle manière que cette lèvre d'étanchéité en élastomère (10) repose directement sur l'arbre (3) ou sur une douille mobile (12) placée sur l'arbre (3) de manière fixe quand à la rotation, le corps d'étanchéité en élastomère (8) dans son emplacement vis-à-vis du carter d'étanchéité (5) étant positionné précisément au moyen de deux corps de positionnement, un premier corps de positionnement, un corps d'appui (13) métallique pourvu d'un perçage de passage d'arbre (7b) en forme d'anneau, et un second corps de positionnement, une bague de positionnement à serrage (23),
- une collerette de fixation de corps d'appui (15) avec un cylindre de fixation de corps d'appui (16) étant disposée du côté du carter d'étanchéité sur le rebord extérieur du corps d'appui (13), et
- le corps d'appui (13) étant pourvu d'une traverse de corps d'appui (18) se raccordant de manière radiale à la collerette de fixation de corps d'appui (15), et un cylindre de positionnement de corps d'appui (21) avec une enveloppe extérieure de cylindre de positionnement de corps d'appui (22) étant disposé à l'intérieur sur la traverse de corps d'appui (18) du corps d'appui (13), et que
- au voisinage du cylindre de positionnement de corps d'appui (21) du côté de l'espace de pression, entre l'extrémité du côté de l'espace de pression du cylindre de positionnement de corps d'appui (21) et l'extrémité libre du corps d'appui (13), pourvue d'un perçage de passage d'arbre (7b) et du côté de l'espace de pression, un col d'appui (19) effilé en direction de l'espace de pression (1), c'est-à-dire vers le perçage de passage d'arbre (7b), étant disposé sur le cylindre de positionnement de corps d'appui (21), et présentant un rebord de col d'appui (20) sur son extrémité libre, pourvue d'un perçage de passage d'arbre (7b) dans le corps d'appui (13) et sur le côté d'espace de pression, et
- le corps d'étanchéité en élastomère (8) présentant un cylindre de positionnement de corps d'étanchéité (27), lequel repose du côté de l'espace extérieur avec son côté avant (28) sur la traverse de corps d'appui (18) et est serré de manière radiale avec son enveloppe intérieure (30) vis-à-vis de l'enveloppe extérieure de cylindre de positionnement de corps d'appui (22) et de manière radiale avec son enveloppe extérieure (29) vis-à-vis de la paroi intérieure (17) du carter d'étanchéité (5), et
- la bague de positionnement à serrage (23) étant disposée du côté d'espace de pression sur le cylindre de positionnement de corps d'étanchéité (27) du corps d'étanchéité en élastomère (8), laquelle bague s'engage dans un dégagement (31) de forme annulaire disposé du côté de l'espace de pression sur le cylindre de positionnement de corps d'étanchéité (27) du corps d'étanchéité en élastomère (8), avec une traverse de positionnement (24) à l'intérieur sur la bague de positionnement à serrage (23), c'est-à-dire du côté de l'arbre, le dégagement (31) étant orienté parallèlement au cylindre de positionnement de corps d'appui (21) et s'introduisant dans le corps d'étanchéité en élastomère (8) jusqu'au dessus du cylindre de positionnement de corps d'appui (21) et formant ainsi sur le corps d'étanchéité en élastomère (8) une traverse d'étanchéité à précontrainte (26) reposant sur le cylindre de positionnement de corps d'appui (21), sur laquelle traverse d'étanchéité à précontrainte (26) la lèvre d'étanchéité en élastomères (10) est disposée, et
- un cylindre de fixation de bague de serrage (25) étant disposé sur la bague de positionnement à serrage (23) à l'extérieur, c'est-à-dire vis-à-vis de la traverse de positionnement (24) du côté du carter, dont le diamètre extérieur présente un surdimensionnement par rapport au diamètre intérieur de la paroi intérieure (17) correspondante de carter d'étanchéité (5), de telle sorte que celui-ci aussi est disposé par ajustage serré à l'état final de montage à l'intérieur du carter d'étanchéité (5), et
- la traverse d'étanchéité à précontrainte (26) du corps d'étanchéité en élastomère (8) reposant sur l'enveloppe extérieure de cylindre de positionnement de corps d'appui (22) du cylindre de positionnement de corps d'appui (21), et
- une traverse de coude de serrage (32) autoportante étant disposée sur la traverse d'étanchéité à précontrainte (26) dans la zone au dessus du col d'appui (19), laquelle traverse de coude de serrage (32) se prolonge au dessus du rebord de col d'appui (20) dans une traverse de coude d'appui (33) également autoportante, sur laquelle, du côté de l'espace de pression, la lèvre d'étanchéité en élastomère (10) est alors disposée, laquelle repose sur l'arbre (3) ou sur une douille mobile (12) disposée sur l'arbre (3) et fixe quant à la rotation, et
- le diamètre extérieur du cylindre de fixation de corps d'appui (16) présentant un surdimensionnement par rapport au diamètre intérieur de la paroi intérieure (17) correspondante de carter d'étanchéité (5), de telle sorte que le corps d'appui (13) est assemblé en état final de montage avec son cylindre de fixation de corps d'appui (16) par complémentarité de force via un ajustage serré à l'intérieur du carter d'étanchéité (5), et
- une rainure extérieure (34) étant disposée au dessus de la traverse de coude d'appui (33) sur le pourtour extérieur du corps d'étanchéité en élastomère (8), dans laquelle rainure extérieure (34) est disposé un ressort de compression (35), lequel permet, à côté de la traverse de coude d'appui (33), également simultanément la retenue de la traverse de coude de serrage (32) autoportante du corps d'étanchéité en élastomère (8), ainsi que le serrage élastique de la lèvre d'étanchéité en élastomère (10) contre l'arbre (3) voire de la douille mobile (12) disposée sur l'arbre (3) de manière fixe quant à la rotation.

2. Joint d'arbre radial selon l'exigence 1 **caractérisé par le fait que**, dans le carter de travail (2) est disposé un perçage de passage d'arbre (7a) par rapport auquel est disposé un fraisage cylindrique de manière symétrique par rapport à la rotation, formant directement le carter d'étanchéité (5) avec sa paroi arrière (6) et avec son perçage de passage d'arbre (7a) disposé dans cette paroi arrière (6).

3. Joint d'arbre radial selon l'exigence 1 **caractérisé par le fait que** le carter d'étanchéité (5) avec sa paroi arrière (6) et avec un perçage de passage d'arbre (7a) disposé dans cette paroi arrière (6) est formé par une douille (41) en métal ou un élément cylindrique de forme en métal, laquelle/lequel est disposé/e de manière imperméable au liquide dans un perçage du carter de travail (2) en tant qu'élément séparé.

4. Joint d'arbre radial selon l'exigence 3 **caractérisé par le fait que**, dans le carter d'étanchéité (5) métallique placé dans le carter de travail (2), lequel carter d'étanchéité (5) est formé comme douille (41), est disposé le joint d'arbre radial, au voisinage duquel du côté de l'espace de pression est placé un palier glissant (42) de telle manière que celui-ci repose en direction axiale sur la bague de positionnement à serrage (23), une paroi arrière de palier glissant (43) étant disposée du côté de l'espace de pression sur ce palier glissant (42), sur laquelle paroi arrière de palier glissant (43) est placé en direction axiale le corps d'appui (13) d'un autre joint d'arbre radial disposé dans la douille (41) selon l'exigence 1.

5. Joint d'arbre radial selon l'exigence 3 **caractérisé par le fait que** le carter d'étanchéité (5) métallique, disposé dans le carter de travail (2) et se présentant sous forme d'élément cylindrique de forme, est pourvu d'une paroi arrière (6) et d'un perçage de passage d'arbre (7a) disposé dans cette paroi arrière (6) avec, dans la zone de perçage de passage d'arbre (7a) sur la paroi arrière (6), une collerette de contact de corps d'étanchéité (14), en forme de cône tronqué, disposée en direction de l'espace de pression (1) et inclinée sous un angle conique de contact (α) situé dans une plage allant de 25° à 38° et, dans le carter d'étanchéité (5) du côté de l'espace de pression, le corps d'étanchéité en élastomère (8) avec sa lèvre d'étanchéité en élastomère (10) et, du côté de l'espace extérieur, un corps d'étanchéité en plastique (9) avec du PTFE et une lèvre d'étanchéité en plastique (11), sont disposés de telle manière que ces lèvres d'étanchéité, la lèvre d'étanchéité en élastomère (10) tout comme la lèvre d'étanchéité en plastique (11), repose/reposent directement sur l'arbre (3) ou sur une douille mobile (12) placée sur l'arbre (3) de manière fixe quand à la rotation, les deux corps d'étanchéité, le corps d'étanchéité en élastomère (8) et le corps d'étanchéité en plastique (9), dans leur placement vis-à-vis du carter d'étanchéité (5) étant positionnés de manière exacte au moyen d'un corps d'appui (13) métallique pourvu d'un perçage de passage d'arbre (7b) en forme d'anneau que sorte que le corps d'appui (13), lequel est disposé avec son cylindre de fixation de corps d'appui (16) par ajustage serré à l'état final de montage à l'intérieur du carter d'étanchéité (5), pressant le corps d'étanchéité en plastique (9) contre la paroi arrière (6) au moyen de sa traverse de corps d'appui (18) se raccordant à la collerette de fixation de corps d'appui (15), et que, entre le corps d'appui (13), le corps d'étanchéité en plastique (9) et l'arbre (3) voire la douille mobile (12), une chambre de lubrification (36) est disposée, dans laquelle se trouve un fluide de lubrification (37).

6. Joint d'arbre radial selon l'une des exigences 1 à 5 **caractérisé par le fait que** le cylindre de fixation de bague de serrage (25) de la bague de positionnement à serrage (23) est relié en l'état assemblé par ajustage serré, en outre au moyen d'un/de plusieurs joint/s de soudure (40) dans la zone de rebord, placés entre le carter d'étanchéité (5) et la bague de positionnement à serrage (23), mais également relié par complémentarité de matériau au carter d'étanchéité (5).

7. Joint d'arbre radial selon l'exigence 6 **caractérisé par le fait que** le/les joint/s de soudure (40) disposé/s entre la bague de positionnement à serrage (23) et le carter d'étanchéité (5) est/sont conçu/s comme joint/s de soudure au laser.

8. Joint d'arbre radial selon l'une des exigences 1 à 5 **caractérisé par le fait que**, afin de sécuriser mécaniquement la position du cylindre de fixation de bague de serrage (25) de la bague de positionnement à serrage (23) dans le carter d'étanchéité (5), sur le pourtour du carter d'étanchéité (5), des cônes de fixation sont disposés, étant par exemple formés par des ergots de positionnement (39).

9. Joint d'arbre radial selon l'exigence 5 **caractérisé par le fait qu'**une graisse PTFE servant de fluide de lubrification (37) est placée dans la chambre de lubrification (36).

10. Joint d'arbre radial selon l'une des exigences 1 à 9 avec une douille mobile (12) placée sur l'arbre (3) fixement quant à la rotation **caractérisé par le fait que** la douille mobile (12) est en acier inoxydable et présente une dureté de surface supérieure à 1120 HV.

11. Joint d'arbre radial selon l'exigence 3 **caractérisé par le fait qu'**un vernis d'étanchéité (38) est appliqué vers le carter de travail (2) sur tout le pourtour sur l'enveloppe extérieure du carter d'étanchéité (5).
